# EUROPEAN PATENT APPLICATION

(11) **EP 3 029 111 A1**
(43) Date of publication of application: **08.06.2016**
(21) Application number: 14831867.8
(22) Date of filing: 31.07.2014
(51) Int. Cl.: C08L 79/04, C08K 3/04, C08K 5/04, C09D 7/12, C09D 179/04

(54) **CARBON MATERIAL DISPERSED FILM FORMATION COMPOSITION**

(30) Priority: 31.07.2013 JP 2013158964
(71) Applicant: Nissan Chemical Industries, Ltd., Chiyoda-ku Tokyo 101-0054 (JP)
(72) Inventor: SHIKAUCHI Yasufumi, Funabashi-shi Chiba 274-8507 (JP); NISHIMURA Naoya, Funabashi-shi Chiba 274-8507 (JP); OZAWA Masaaki, Funabashi-shi Chiba 274-8507 (JP)
(74) Representative: Bailey, Sam Rogerson
(86) International application number: PCT/JP2014/070228
(87) International publication number: WO 2015/016316

(57) **Abstract**

A carbon material dispersed film formation composition including: a polymer that includes a triazine ring-containing repeating unit structure, such as that represented by formula (17) for example; a cross-linking agent; and a carbon material. The carbon material is well dispersed in the composition, and therefore by using this composition, a cured film in which the carbon material is well dispersed can be produced.

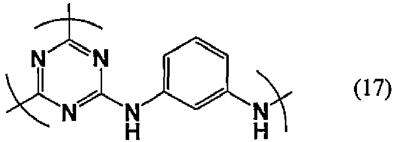

## Description

### TECHNICAL FIELD

This invention relates to a carbon material-dispersed film-forming composition.

### BACKGROUND ART

Carbon nanotubes (also abbreviated below as "CNTs") are being studied for potential use in a wide range of fields as a key nanotechnology material.

Applications are broadly divided into the use of single CNTs as transistors, microscope probes and the like, and the collective use of a large number of CNTs in bulk, such as in electron emission electrodes, fuel cell electrodes, and electrically conductive composites, inks, paints and the like in which CNTs are dispersed.

When single CNTs are used, the method employed is one in which, for example, the CNTs are added to a solvent and ultrasonically irradiated, following which only those CNTs that are individually dispersed are removed by a technique such as electrophoresis.

On the other hand, in an electrically conductive composite that uses CNTs in bulk, the CNTs must be well dispersed within the polymer or the like serving as the matrix material.

However, CNTs are generally difficult to disperse; in composites obtained by an ordinary means of dispersion, the state of dispersion is incomplete. Hence, investigations are being conducted to increase the dispersibility of CNTs by various techniques, such as the surface modification of CNTs and chemical modification of the CNT surface.

For example, one method for dispersing CNTs that has been disclosed involves depositing a poly((m-phenylene vinylene)-co-(dioctoxy-p-phenylene vinylene)) having a coil-like structure on the CNT surface (Patent Document 1).

Although this publication shows that it is possible to individually disperse CNTs within an organic solvent and that the polymer is deposited on single CNTs, the technique is one in which the CNTs, after having been temporarily dispersed to a certain degree, are made to aggregate and precipitate, and thereby collected. It is not a technique capable of storing CNTs in an individually dissolved state for an extended period of time.

A method that focuses on highly branched polymers as the CNT dispersant has also been disclosed (Patent Document 2). Highly branched polymers are polymers having branches within the skeleton, such as star polymers, dendrimers classified as dendritic polymers, and hyperbranched polymers.

These highly branched polymers have distinctive shapes which, owing to the deliberate introduction of branches, are particle-like and have a relatively sparse interior, and moreover have a large number of ends that can be modified by the introduction of various functional groups. By virtue of these characteristics, it is possible for such polymers, compared with string-like linear-chain polymers, to disperse CNTs to a higher degree.

However, in the art of Patent Document 2 which uses these highly branched polymers as dispersants, in addition to mechanical treatment, thermal treatment is also required to maintain the individually dispersed state of the CNTs for a long period of time, and so the CNT dispersing ability is not all that high.

Hyperbranched polymers which include triazine ring and aromatic ring-containing recurring groups have an excellent ability to disperse/dissolve carbon nanotubes. When these highly branched polymers are used as carbon nanotube dispersing/solubilizing agents, it is possible to individually dissolve (at least a portion of) the carbon nanotubes down in size to single nanotubes (Patent Document 3).

Also, when a highly branched polymer composed of a triarylamine compound with an aldehyde compound and/or a ketone compound is used as a carbon nanotube dispersing/solubilizing agent, it is possible to individually dissolve (at least a portion of) the carbon nanotubes down in size to single nanotubes. By using such a dispersion and a uril-type crosslinking agent, a thermoset film in which CNTs are uniformly dispersed is obtained (Patent Document 4).

In recent years, there has arisen a need for curable film-forming compositions in the fields of electronic devices and optical materials, including components in the fabrication of, for example, liquid-crystal displays, organic electroluminescence (EL) displays, touchscreens, optical semiconductor devices (LEDs), solid-state image sensors, organic thin-film solar cells, dye-sensitized solar cells, organic thin-film transistors (TFTs), lenses, prisms, cameras, binoculars, microscopes and semiconductor exposure systems. However, the feasibility of using in such applications hyperbranched polymers that include triazine ring and aromatic ring-containing recurring units has not heretofore been investigated.

### PRIOR ART DOCUMENTS

### PATENT DOCUMENTS

Patent Document 1: JP-A 2000-44216
Patent Document 2: WO 2008/139839
Patent Document 3: WO 2010/128660
Patent Document 4: WO 2011/065395

### SUMMARY OF THE INVENTION

### PROBLEMS TO BE SOLVED BY THE INVENTION

This invention was arrived at in view of the above circumstances. The object of the invention is to provide a carbon material-dispersed film-forming composition within which a carbon material is well dispersed and which is capable of providing a cured film in which the carbon material is in a well-dispersed state.

### MEANS FOR SOLVING THE PROBLEMS

The inventors have conducted extensive investigations, as a result of which they have discovered that film-forming compositions containing a specific triazine ring-containing polymer, a crosslinking agent and a carbon material, in addition to having a carbon material that is well-dispersed within the composition, provide a cured film in which the carbon material is well dispersed even after film formation.

Accordingly, the invention provides:
1. A carbon material-dispersed film-forming composition which is characterized by comprising a triazine ring-containing polymer having a recurring unit structure of formula (1) below, a crosslinking agent and a carbon material 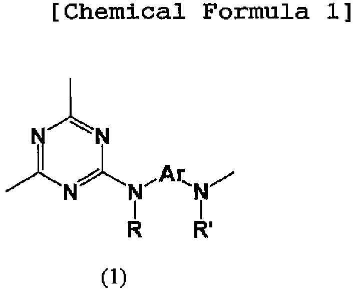 {wherein R and R' are each independently a hydrogen atom, an alkyl group, an alkoxy group, an aryl group or an aralkyl group; and Ar is at least one moiety selected from the group consisting of moieties of formulas (2) to (13) 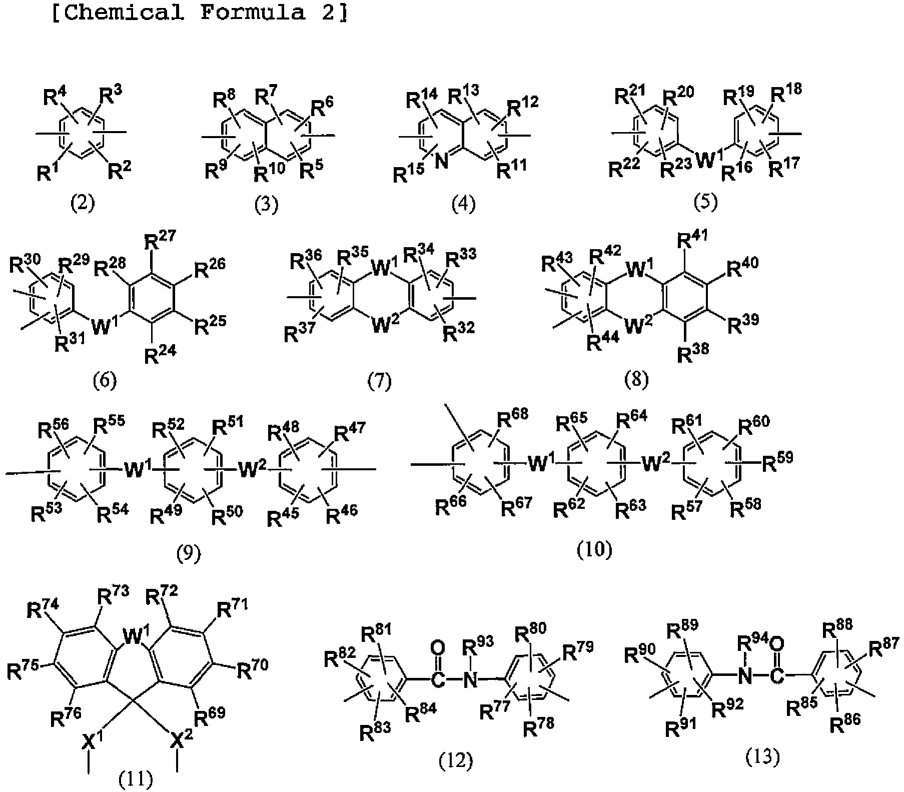 [wherein R¹ to R⁹² are each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; R⁹³ and R⁹⁴ are hydrogen atoms or alkyl groups of 1 to 10 carbon atoms which may have a branched structure; W¹ and W² are each independently a single bond, CR⁹⁵R⁹⁶ (R⁹⁵ and R⁹⁶ being each independently a hydrogen atom or an alkyl group of 1 to 10 carbon atoms which may have a branched structure (with the proviso that they may together form a ring)), C=O, O, S, SO, SO₂ or NR⁹⁷ (R⁹⁷ being a hydrogen atom or an alkyl group of 1 to 10 carbon atoms which may have a branched structure); and X¹ and X² are each independently a single bond, an alkylene group of 1 to 10 carbon atoms which may have a branched structure, or a group of formula (14) 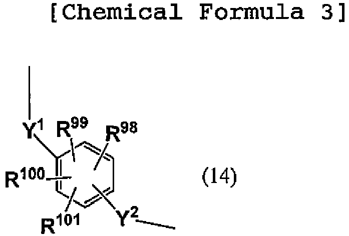 (R⁹⁸ to R¹⁰¹ being each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; and Y¹ and Y² being each independently a single bond or an alkylene group of 1 to 10 carbon atoms which may have a branched structure)]};
2. The carbon material-dispersed film-forming composition of 1 above, wherein the carbon material includes at least one selected from the group consisting of carbon nanotubes, carbon nanohorns, fullerene, graphene, carbon black, ketjen black, graphite and carbon fibers;
3. The carbon material-dispersed film-forming composition of 1 above, wherein the carbon material includes carbon nanotubes, which carbon nanotubes are individually dispersed down in size to single nanotubes;
4. The carbon material-dispersed film-forming composition of 1 above, wherein the carbon material is carbon black;
5. The carbon material-dispersed film-forming composition of any one of 1 to 4 above, wherein the crosslinking agent is a compound that is light- and/or heat-curable;
6. The carbon material-dispersed film-forming composition of any one of 1 to 4 above, wherein the crosslinking agent is at least one selected from the group consisting of polyfunctional (meth)acrylic compounds, polyfunctional epoxy compounds and polyfunctional isocyanate compounds;
7. A cured film obtained by curing the carbon material-dispersed film-forming composition of any one of 1 to 6 above;
8. An electronic device comprising a substrate and the cured film of 7 above formed on the substrate; and
9. An optical material comprising a substrate and the cured film of 7 above formed on the substrate.

### ADVANTAGEOUS EFFECTS OF THE INVENTION

Because the carbon material-dispersed film-forming composition of the invention includes a given triazine ring-containing polymer (hyperbranched polymer), CNTs and other carbon materials disperse well within the composition. CNTs in particular are individually dissolved (dispersed) down in size to single nanotubes.

Because the carbon material-dispersed film-forming composition of the invention includes the triazine ring-containing polymer described above, a crosslinking agent and a carbon material, using this composition, it is possible to form a cured film in which the carbon material is well dispersed even after film formation. In particular, because the triazine ring-containing polymer used in this invention functions both as a dispersant for the carbon material such as CNTs and as a binder, hybridization is possible without lowering the dispersibility of the carbon material. Hence, a highly dispersed (in the case of CNTs, individually dispersed) and uniform cured film can be produced even when a large amount of carbon material is included.

Because this cured film contains a crosslinked triazine ring-containing polymer and a carbon material, it is capable of exhibiting the properties of high heat resistance, high refractive index and low volume shrinkage attributable to the crosslinked triazine ring-containing polymer. Moreover, it exhibits the electrical conductivity and light-shielding properties, and also such functions as internal reflection prevention and transmittance control, attributable to the carbon material. These qualities make it suitable for use in the fields of electronic devices and optical materials, including components in the fabrication of, for example, liquid-crystal displays, organic electroluminescence (EL) displays, touchscreens, optical semiconductor (LED) devices, solid-state image sensors, organic thin-film solar cells, dye-sensitized solar cells, organic thin-film transistors (TFTs), lenses, prisms, cameras, binoculars, microscopes and semiconductor exposure systems, and also in the field of decorative paints and inks such as for the surfaces of various types of components.

### BRIEF DESCRIPTION OF THE DIAGRAMS

[Fig. 1] FIG. 1 is a ¹H-NMR spectrum of Polymer Compound [3] obtained in Synthesis Example 1.
[Fig. 2] FIG. 2 is a graph showing the TG-DTA results for Polymer Compound [3] obtained in Synthesis Example 1.
[Fig. 3] FIG. 3 is the UV-visible-near IR absorption spectrum for SWCNT Dispersion 1 obtained in Production Example 4.
[Fig. 4] FIG. 4 is the UV-visible-near IR absorption spectrum for SWCNT Dispersion 2 obtained in Production Example 5.
[Fig. 5] FIG. 5 is the UV-visible-near IR absorption spectrum for Photocured Film 1 obtained in Example 2.
[Fig. 6] FIG. 6 is the UV-visible-near IR absorption spectrum for Photocured Film 1 obtained in Example 2, following 5 minutes of immersion in CHN/water.
[Fig. 7] FIG. 7 is the UV-visible-near IR absorption spectrum for Photocured Film 2 obtained in Comparative Example 2.
[Fig. 8] FIG. 8 is the UV-visible-near IR absorption spectrum for Photocured Film 2 obtained in Comparative Example 2, following 5 minutes immersion in CHN/water.

### EMBODIMENT FOR CARRYING OUT THE INVENTION

The invention is described more fully below.

The carbon material-dispersed film-forming composition of the invention contains a triazine ring-containing polymer which includes recurring unit structures of formula (1) below, a crosslinking agent and a carbon material.

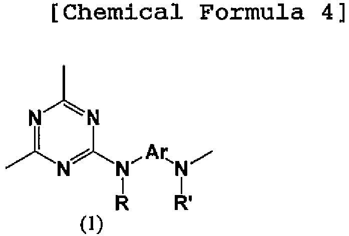

In this formula, R and R' are each independently a hydrogen atom, an alkyl group, an alkoxy group, an aryl group or an aralkyl group.

In the invention, the number of carbon atoms on the alkyl group is not particularly limited, although from 1 to 20 is preferred. To further increase the heat resistance of the polymer, the number of carbon atoms is more preferably from 1 to 10, and even more preferably from 1 to 3. The structure may be linear, branched or cyclic.

Illustrative examples of alkyl groups include methyl, ethyl, n-propyl, isopropyl, cyclopropyl, n-butyl, isobutyl, s-butyl, t-butyl, cyclobutyl, 1-methylcyclopropyl, 2-methylcyclopropyl, n-pentyl, 1-methyl-n-butyl, 2-methyl-n-butyl, 3-methyl-n-butyl, 1,1-dimethyl-n-propyl, 1,2-dimethyl-n-propyl, 2,2-dimethyl-n-propyl, 1-ethyl-n-propyl, cyclopentyl, 1-methylcyclobutyl, 2-methylcyclobutyl, 3-methylcyclobutyl, 1,2-dimethylcyclopropyl, 2,3-dimethylcyclopropyl, 1-ethylcyclopropyl, 2-ethylcyclopropyl, n-hexyl, 1-methyl-n-pentyl, 2-methyl-n-pentyl, 3-methyl-n-pentyl, 4-methyl-n-pentyl, 1,1-dimethyl-n-butyl, 1,2-dimethyl-n-butyl, 1,3-dimethyl-n-butyl, 2,2-dimethyl-n-butyl, 2,3-dimethyl-n-butyl, 3,3-dimethyl-n-butyl, 1-ethyl-n-butyl, 2-ethyl-n-butyl, 1,1,2-trimethyl-n-propyl, 1,2,2-trimethyl-n-propyl, 1-ethyl-1-methyl-n-propyl, 1-ethyl-2-methyl-n-propyl, cyclohexyl, 1-methylcyclopentyl, 2-methylcyclopentyl, 3-methylcyclopentyl, 1-ethylcyclobutyl, 2-ethylcyclobutyl, 3-ethylcyclobutyl, 1,2-dimethylcyclobutyl, 1,3-dimethylcyclobutyl, 2,2-dimethylcyclobutyl, 2,3-dimethylcyclobutyl, 2,4-dimethylcyclobutyl, 3,3-dimethylcyclobutyl, 1-n-propylcyclopropyl, 2-n-propylcyclopropyl, 1-isopropylcyclopropyl, 2-isopropylcyclopropyl, 1,2,2-trimethylcyclopropyl, 1,2,3-trimethylcyclopropyl, 2,2,3-trimethylcyclopropyl, 1-ethyl-2-methylcyclopropyl, 2-ethyl-1-methylcyclopropyl, 2-ethyl-2-methylcyclopropyl and 2-ethyl-3-methylcyclopropyl groups.

The number of carbon atoms on the alkoxy group is not particularly limited, although from 1 to 20 is preferred. To further increase the heat resistance of the polymer, the number of carbon atoms is more preferably from 1 to 10, and even more preferably from 1 to 3. The structure of the alkyl moiety may be linear, branched or cyclic.

Illustrative examples of alkoxy groups include methoxy, ethoxy, n-propoxy, isopropoxy, n-butoxy, isobutoxy, s-butoxy, t-butoxy, n-pentoxy, 1-methyl-n-butoxy, 2-methyl-n-butoxy, 3-methyl-n-butoxy, 1,1-dimethyl-n-propoxy, 1,2-dimethyl-n-propoxy, 2,2-dimethyl-n-propoxy, 1-ethyl-n-propoxy, n-hexyloxy, 1-methyl-n-pentyloxy, 2-methyl-n-pentyloxy, 3-methyl-n-pentyloxy, 4-methyl-n-pentyloxy, 1,1-dimethyl-n-butoxy, 1,2-dimethyl-n-butoxy, 1,3-dimethyl-n-butoxy, 2,2-dimethyl-n-butoxy, 2,3-dimethyl-n-butoxy, 3,3-dimethyl-n-butoxy, 1-ethyl-n-butoxy, 2-ethyl-n-butoxy, 1,1,2-trimethyl-n-propoxy, 1,2,2-trimethyl-n-propoxy, 1-ethyl-1-methyl-n-propoxy and 1-ethyl-2-methyl-n-propoxy groups.

The number of carbon atoms on the aryl group is not particularly limited, although from 6 to 40 is preferred. To further increase the heat resistance of the polymer, the number of carbon atoms is more preferably from 6 to 16, and even more preferably from 6 to 13.

Illustrative examples of aryl groups include phenyl, o-chlorophenyl, m-chlorophenyl, p-chlorophenyl, o-fluorophenyl, p-fluorophenyl, o-methoxyphenyl, p-methoxyphenyl, p-nitrophenyl, p-cyanophenyl, α-naphthyl, β-naphthyl, o-biphenylyl, m-biphenylyl, p-biphenylyl, 1-anthryl, 2-anthryl, 9-anthryl, 1-phenanthryl, 2-phenanthryl, 3-phenanthryl, 4-phenanthryl and 9-phenanthryl groups.

The number of carbon atoms on the aralkyl group is not particularly limited, although from 7 to 20 carbon atoms is preferred. The alkyl moiety may be linear, branched or cyclic.

Illustrative examples of aralkyl groups include benzyl, p-methylphenylmethyl, m-methylphenylmethyl, o-ethylphenylmethyl, m-ethylphenylmethyl, p-ethylphenylmethyl, 2-propylphenylmethyl, 4-isopropylphenylmethyl, 4-isobutylphenylmethyl and α-naphthylmethyl groups.

Ar is at least one moiety selected from the group consisting of moieties of formulas (2) to (13).

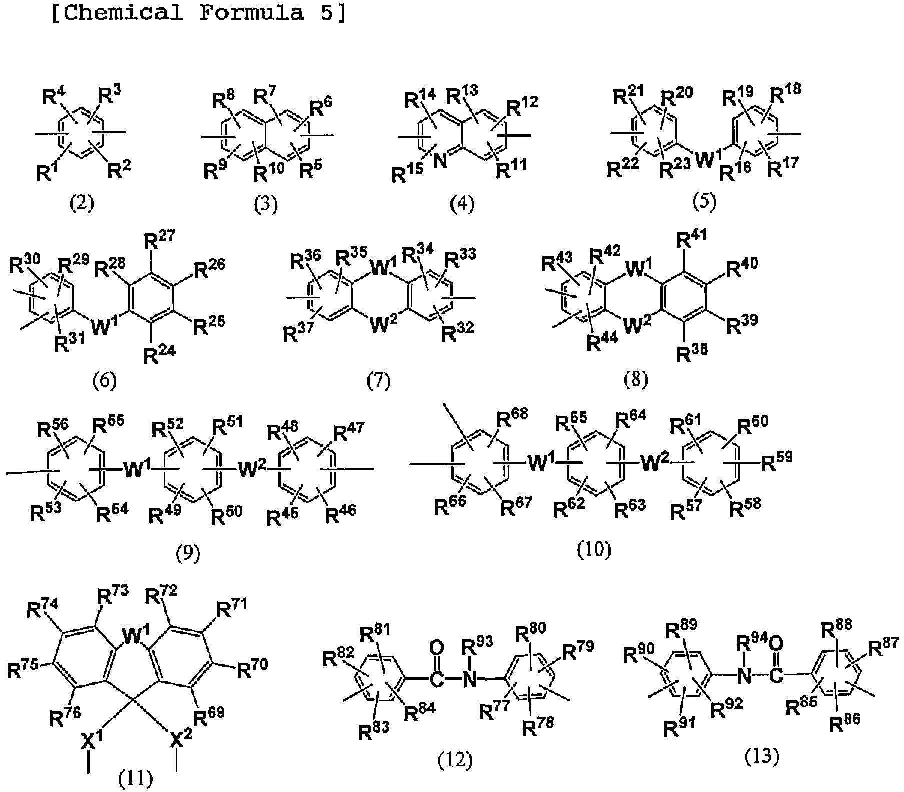

R¹ to R⁹² are each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; W¹ and W² are each independently a single bond, CR⁹⁵R⁹⁶ (R⁹⁵ and R⁹⁶ being each independently a hydrogen atom or an alkyl group of 1 to 10 carbon atoms which may have a branched structure (with the proviso that they may together form a ring)), C=O, O, S, SO, SO₂ or NR⁹⁷ (R⁹⁷ being a hydrogen atom or an alkyl group of 1 to 10 carbon atoms which may have a branched structure); and R⁹³ and R⁹⁴ are hydrogen atoms or alkyl groups of 1 to 10 carbon atoms which may have a branched structure.

The halogen atom is exemplified by fluorine, chlorine, bromine and iodine atoms.

The alkyl groups and alkoxy groups are exemplified by the same groups as mentioned above.

X¹ and X² are each independently a single bond, an alkylene group of 1 to 10 carbon atoms which may have a branched structure, or a group of formula (14).

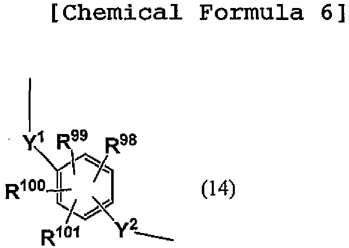

R⁹⁸ to R¹⁰¹ are each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; and Y¹ and Y² are each independently a single bond or an alkylene group of 1 to 10 carbon atoms which may have a branched structure. These halogen atoms, alkyl groups and alkoxy groups are exemplified in the same way as above.

Illustrative examples of alkylene groups of 1 to 10 carbons which may have a branched structure include methylene, ethylene, propylene, trimethylene, tetramethylene and pentamethylene groups.

In particular, "Ar" is preferably at least one moiety selected from among those of formulas (2) and (5) to (13), and is more preferably at least one moiety selected from among those of formulas (2), (5), (7), (8) and (11) to (13). Examples of aryl groups of formulas (2) to (13) include, but are not limited to, those of the formulas shown below.

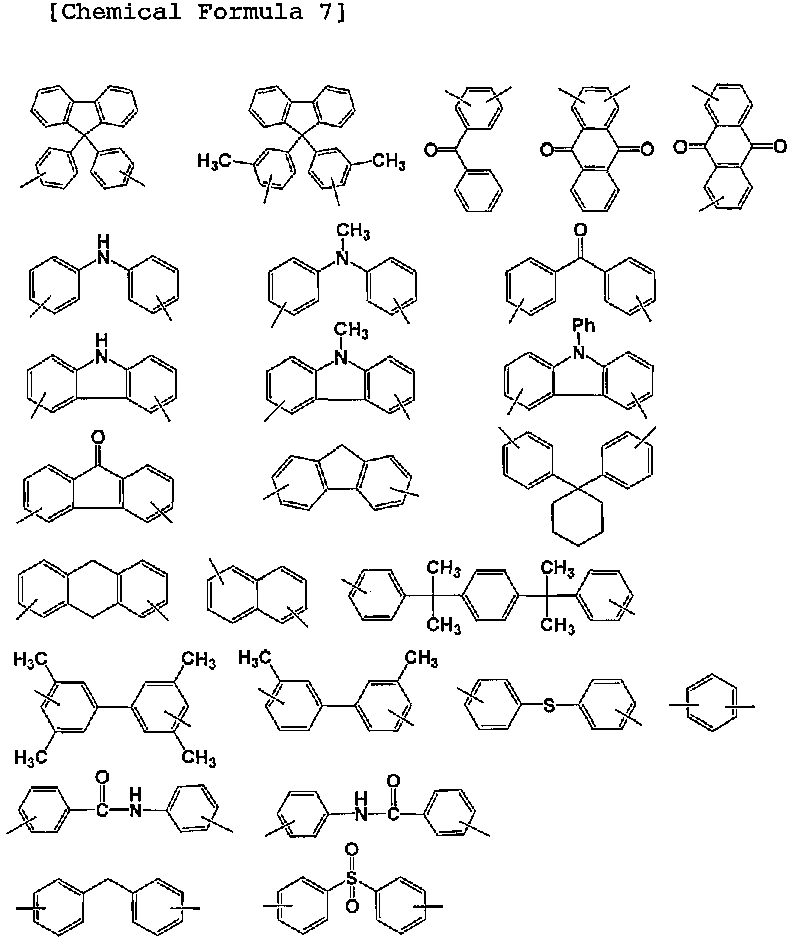

Of these, to obtain a polymer having a higher refractive index, aryl groups of the following formulas are more preferred.

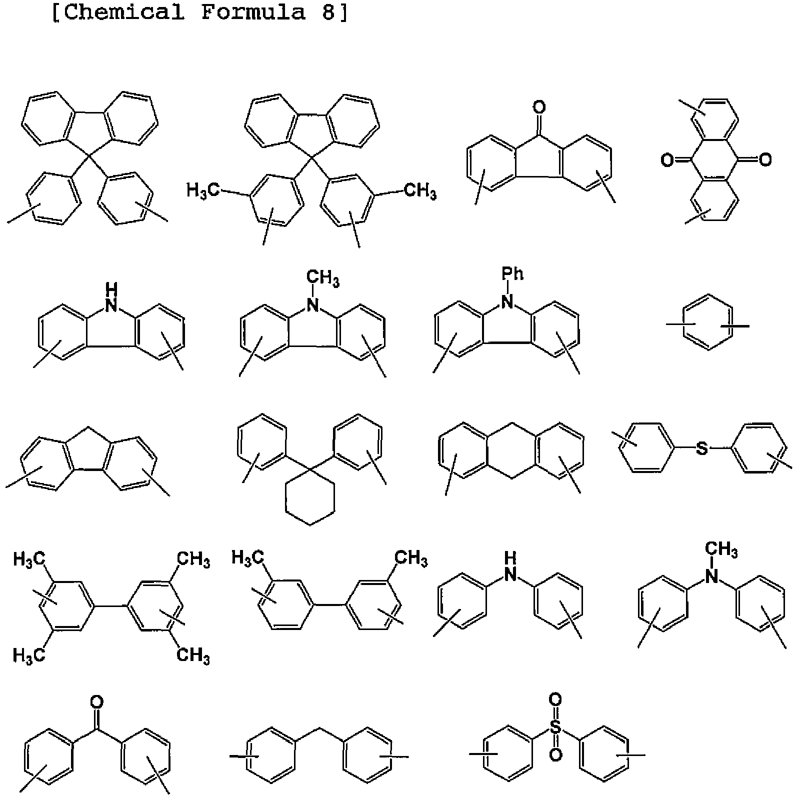

In particular, to increase the solubility in solvents having a high safety, such as resist solvents, it is preferable to include a recurring unit structure of formula (15).

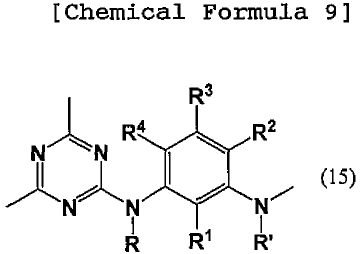

In this formula, R, R' and R¹ to R⁴ are as defined above.

From such a standpoint, examples of especially preferred recurring unit structures are ones of formula (16) below, with a highly branched polymer (hyperbranched polymer) of formula (17) below being best.

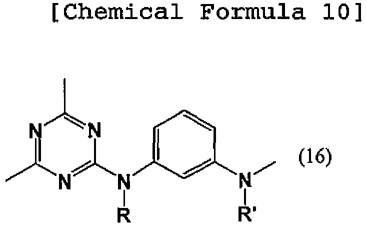

In this formula, R and R' are as defined above.

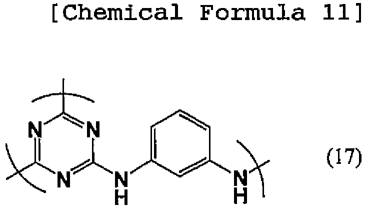

The weight-average molecular weight of the polymer in this invention, although not particularly limited, is preferably from 500 to 500,000, and more preferably from 500 to 100,000. To further improve the heat resistance and lower the shrinkage ratio, the weight-average molecular weight is preferably 2,000 or more. To further increase the solubility and lower the viscosity of the resulting solution, the weight-average molecular weight is preferably not more than 50,000, more preferably not more than 30,000, and even more preferably not more than 10,000.

The weight-average molecular weight in this invention is the average molecular weight measured by gel permeation chromatography (GPC) against a polystyrene standard.

The triazine ring-containing polymer of the invention can be prepared by the method disclosed in above-cited Patent Document 3.

For example, as shown in Scheme 1 below, a highly branched polymer (hyperbranched polymer) having the recurring structure (17') can be obtained by reacting a cyanuric halide (18) with an m-phenylenediamine compound (19) in a suitable organic solvent. 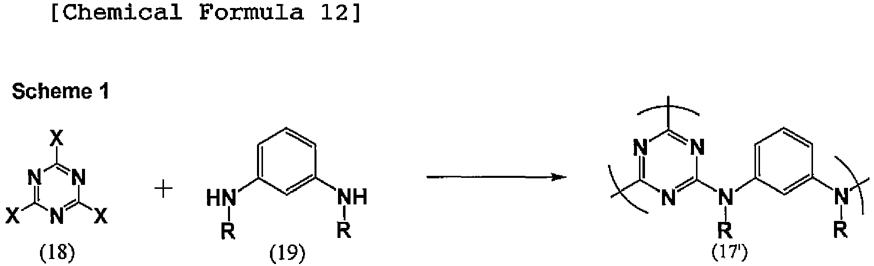 Here, X is independently a halogen atom, and R is as defined above.

As shown in Scheme 2 below, a highly branched polymer (hyperbranched polymer) having the recurring structure (17') can be synthesized from a compound (20) obtained by reacting equimolar amounts of a cyanuric halide (18) and an m-phenylenediamine compound (19) in a suitable organic solvent. 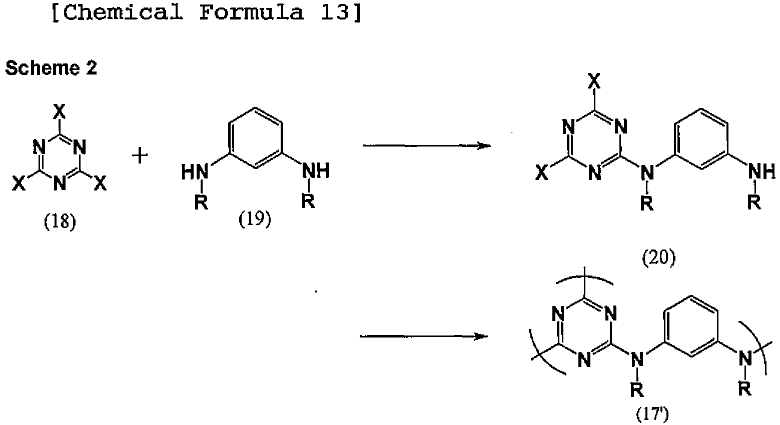 In the above formulas, each X is independently a halogen atom, and R is as defined above.

In the methods of Schemes 1 and 2, the starting materials may be charged in any respective amounts so long as the target polymer is obtained, although the use of from 0.01 to 10 equivalents of the diamino compound (19) per equivalent of the cyanuric halide (18) is preferred.

In the method of Scheme 1 in particular, it is preferable to avoid using 3 equivalents of the diamino compound (19) per 2 equivalents of the cyanuric halide (18). By including the respective functional groups in amounts that are not chemically equivalent, the formation of a gel can be prevented.

To obtain highly branched polymers (hyperbranched polymers) of various molecular weights which have numerous terminal triazine rings, it is preferable to use the diamino compound (19) in an amount of less than 3 equivalents per 2 equivalents of the cyanuric halide (18).

On the other hand, to obtain highly branched polymers (hyperbranched polymers) of various molecular weights which have numerous terminal amines, it is preferable to use the cyanuric halide (18) in an amount of less than 2 equivalents per 3 equivalents of the diamino compound (19).

For example, in cases where a thin-film has been produced, for the thin-film to have an excellent transparency and light resistance, a highly branched polymer (hyperbranched polymer) which has numerous terminal triazine rings is preferred.

Various solvents that are commonly used in this type of reaction may be used as the organic solvent. Illustrative examples include tetrahydrofuran, dioxane, and dimethylsulfoxide; amide solvents such as N,N-dimethylformamide, N-methyl-2-pryrrolidone, tetramethylurea, hexamethylphosphoramide, N,N-dimethylacetamide, N-methyl-2-piperidone, N,N-dimethylethyleneurea, N,N,N',N'-tetramethylmalonamide, N-methylcaprolactam, N-acetylpyrrolidine, N,N-diethylacetamide, N-ethyl-2-pyrrolidone, N,N-dimethylpropionamide, N,N-dimethylisobutyramide, N-methylformamide and N,N'-dimethylpropyleneurea; and mixed solvents thereof.

Of the above, N,N-dimethylformamide, dimethylsulfoxide, N-methyl-2-pyrrolidone, N,N-dimethylacetamide, and mixed solvents thereof are preferred. N,N-Dimethylacetamide and N-methyl-2-pyrrolidone are especially preferred.

In the Scheme 1 reaction and the second stage reaction in Scheme 2, the reaction temperature may be suitably set in the range from the melting point to the boiling point of the solvent used, with the temperature being preferably from about 0° C to about 150° C, and more preferably from 60° C to 100°C.

In the Scheme 1 reaction in particular, to suppress linearity and increase the degree of branching, the reaction temperature is preferably from 60°C to 150°C, more preferably from 80°C to 150° C, and even more preferably from 80°C to 120° C.

In the first stage reaction of Scheme 2, the reaction temperature may be suitably set in the range from the melting point to the boiling point of the solvent used, with a temperature of from about -50°C to about 50°C being preferred, a temperature of from about -20°C to about 50°C being more preferred, a temperature of from about -10°C to about 50°C being even more preferred, and a temperature of from -10°C to 10°C being still more preferred.

In the Scheme 2 method in particular, the use of a two-stage process consisting of a first step involving reaction at from -50°C to 50°C followed by a second step involving reaction at from 60°C to 150°C is preferred.

In each of the above reactions, the ingredients may be added in any order. However, in the Scheme 1 reaction, the best method is to heat a solution containing either the cyanuric halide (18) or the diamino compound (19) and the organic solvent to a temperature of from 60°C to 150°C, and preferably from 80°C to 150° C, then add the remaining ingredient --the diamino compound (19) or the cyanuric halide (18)-- to the resulting solution at this temperature.

In this case, either ingredient may be used as the ingredient which is initially dissolved in the solvent or as the ingredient which is subsequently added, although a method wherein the cyanuric halide (18) is added to a heated solution of the diamino compound (19) is preferred.

In the Scheme 2 reactions, either ingredient may be used as the ingredient which is initially dissolved in the solvent or as the ingredient which is subsequently added, although a method wherein the diamino compound (19) is added to a cooled solution of the cyanuric halide (18) is preferred.

The subsequently added ingredient may be added neat or may be added as a solution of the ingredient dissolved in an organic solvent such as any of those mentioned above. However, in terms of the ease of operation and the controllability of the reaction, the latter approach is preferred.

Also, addition may be carried out gradually such as in a dropwise manner, or the entire amount may be added all at once in a batchwise manner.

In Scheme 1, even when the reaction is carried out in a single stage after both compounds have been mixed together in a heated state (that is, without raising the temperature in a stepwise fashion), the desired triazine ring-containing highly branched polymer (hyperbranched polymer) can be obtained without gelation.

In the Scheme 1 reaction and the second stage reaction in Scheme 2, various bases which are commonly used during or after polymerization may be added.

Illustrative examples of such bases include potassium carbonate, potassium hydroxide, sodium carbonate, sodium hydroxide, sodium bicarbonate, sodium ethoxide, sodium acetate, lithium carbonate, lithium hydroxide, lithium oxide, potassium acetate, magnesium oxide, calcium oxide, barium hydroxide, trilithium phosphate, trisodium phosphate, tripotassium phosphate, cesium fluoride, aluminum oxide, ammonia, trimethylamine, triethylamine, diisopropylamine, diisopropylethylamine, N-methylpiperidine, 2,2,6,6-tetramethyl-N-methylpiperidine, pyridine, 4-dimethylaminopyridine and N-methylmorpholine.

The amount of base added per equivalent of the cyanuric halide (18) is preferably from 1 to 100 equivalents, and more preferably from 1 to 10 equivalents. These bases may be used in the form of an aqueous solution.

In the methods of both schemes, following reaction completion, the product can be easily purified by a suitable technique such as reprecipitation.

Also, in the present invention, some portion of the halogen atoms on at least one terminal triazine ring may be capped with, for example, an alkyl, aralkyl, aryl, alkylamino, alkoxysilyl-containing alkylamino, aralkylamino, arylamino, alkoxy, aralkyloxy, aryloxy or ester group.

Of these, alkylamino, alkoxysilyl-containing alkylamino, aralkylamino and arylamino groups are preferred. Alkylamino and arylamino groups are more preferred. Arylamino groups are even more preferred.

These alkyl groups and alkoxy groups are exemplified by the same groups as mentioned above.

Illustrative examples of ester groups include methoxycarbonyl and ethoxycarbonyl groups.

Illustrative examples of aryl groups include phenyl, o-chlorophenyl, m-chlorophenyl, p-chlorophenyl, o-fluorophenyl, p-fluorophenyl, o-methoxyphenyl, p-methoxyphenyl, p-nitrophenyl, p-cyanophenyl, α-naphthyl, β-naphthyl, o-biphenylyl, m-biphenylyl, p-biphenylyl, 1-anthryl, 2-anthryl, 9-anthryl, 1-phenanthryl, 2-phenanthryl, 3-phenanthryl, 4-phenanthryl and 9-phenanthryl groups.

Illustrative examples of aralkyl groups include benzyl, p-methylphenylmethyl, m-methylphenylmethyl, o-ethylphenylmethyl, m-ethylphenylmethyl, p-ethylphenylmethyl, 2-propylphenylmethyl, 4-isopropylphenylmethyl, 4-isobutylphenylmethyl and α-naphthylmethyl groups.

Illustrative examples of alkylamino groups include methylamino, ethylamino, n-propylamino, isopropylamino, n-butylamino, isobutylamino, s-butylamino, t-butylamino, n-pentylamino, 1-methyl-n-butylamino, 2-methyl-n-butylamino, 3-methyl-n-butylamino, 1,1-dimethyl-n-propylamino, 1,2-dimethyl-n-propylamino, 2,2-dimethyl-n-propylamino, 1-ethyl-n-propylamino, n-hexylamino, 1-methyl-n-pentylamino, 2-methyl-n-pentylamino, 3-methyl-n-pentylamino, 4-methyl-n-pentylamino, 1,1-dimethyl-n-butylamino, 1,2-dimethyl-n-butylamino, 1,3-dimethyl-n-butylamino, 2,2-dimethyl-n-butylamino, 2,3-dimethyl-n-butylamino, 3,3-dimethyl-n-butylamino, 1-ethyl-n-butylamino, 2-ethyl-n-butylamino, 1,1,2-trimethyl-n-propylamino, 1,2,2-trimethyl-n-propylamino, 1-ethyl-1-methyl-n-propylamino and 1-ethyl-2-methyl-n-propylamino groups.

Illustrative examples of aralkylamino groups include benzylamino, methoxycarbonylphenylmethylamino, ethoxycarbonylphenylmethylamino, p-methylphenylmethylamino, m-methylphenylmethylamino, o-ethylphenylmethylamino, m-ethylphenylmethylamino, p-ethylphenylmethylamino, 2-propylphenylmethylamino, 4-isopropylphenylmethylamino, 4-isobutylphenylmethylamino, naphthylmethylamino, methoxycarbonylnaphthylmethylamino and ethoxycarbonylnaphthylmethylamino groups.

Illustrative examples of arylamino groups include phenylamino, methoxycarbonylphenylamino, ethoxycarbonylphenylamino, naphthylamino, methoxycarbonylnaphthylamino, ethoxycarbonylnaphthylamino, anthranylamino, pyrenylamino, biphenylamino, terphenylamino and fluorenylamino groups.

Alkoxysilyl-containing alkylamino groups are exemplified by monoalkoxysilyl-containing alkylamino groups, dialkoxysilyl-containing alkylamino groups and trialkoxysilyl-containing alkylamino groups. Illustrative examples include 3-trimethoxysilylpropylamino, 3-triethoxysilylpropylamino, 3-dimethylethoxysilylpropylamino, 3-methyldiethoxysilylpropylamino, N-(2-aminoethyl)-3-dimethylmethoxysilylpropylamino, N-(2-aminoethyl)-3-methyldimethoxysilylpropylamino and N-(2-aminoethyl)-3-trimethoxysilylpropylamino groups.

Illustrative examples of aryloxy groups include phenoxy, naphthoxy, anthranyloxy, pyrenyloxy, biphenyloxy, terphenyloxy and fluorenyloxy groups.

Illustrative examples of aralkyloxy groups include benzyloxy, p-methylphenylmethyloxy, m-methylphenylmethyloxy, o-ethylphenylmethyloxy, m-ethylphenylmethyloxy, p-ethylphenylmethyloxy, 2-propylphenylmethyloxy, 4-isopropylphenylmethyloxy, 4-isobutylphenylmethyloxy and α-naphthylmethyloxy groups.

These groups can be easily introduced by substituting a halogen atom on a triazine ring with a compound that furnishes the corresponding substituent. For example, as shown in Scheme 3 below, by adding an aniline derivative and carrying out a reaction, a highly branched polymer (21) having a phenylamino group on at least one end is obtained.

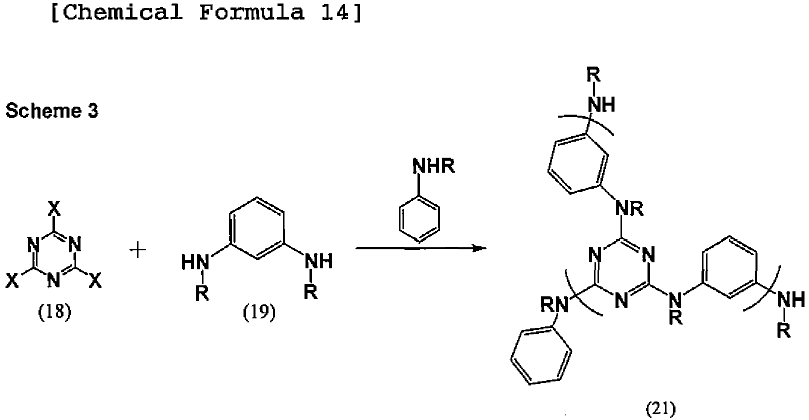

In these formulas, X and R are as defined above.

At this time, by reacting the cyanuric halide with a diaminoaryl compound while at the same time charging an organic monoamine, that is, in the presence of an organic monoamine, it is possible to obtain a flexible hyperbranched polymer having a low degree of branching in which the rigidity of the hyperbranched polymer has been diminished.

The hyperbranched polymer obtained in this way has an excellent solubility in solvent (meaning that agglomeration is inhibited) and has an excellent crosslinkability with a crosslinking agent.

An alkyl monoamine, aralkyl monoamine or aryl monoamine may be used here as the organic monoamine.

Illustrative examples of alkyl monoamines include methylamine, ethylamine, n-propylamine, isopropylamine, n-butylamine, isobutylamine, s-butylamine, t-butylamine, n-pentylamine, 1-methyl-n-butylamine, 2-methyl-n-butylamine, 3-methyl-n-butylamine, 1,1-dimethyl-n-propylamine, 1,2-dimethyl-n-propylamine, 2,2-dimethyl-n-propylamine, 1-ethyl-n-propylamine, n-hexylamine, 1-methyl-n-pentylamine, 2-methyl-n-pentylamine, 3-methyl-n-pentylamine, 4-methyl-n-pentylamine, 1,1-dimethyl-n-butylamine, 1,2-dimethyl-n-butylamine, 1,3-dimethyl-n-butylamine, 2,2-dimethyl-n-butylamine, 2,3-dimethyl-n-butylamine, 3,3-dimethyl-n-butylamine, 1-ethyl-n-butylamine, 2-ethyl-n-butylamine, 1,1,2-trimethyl-n-propylamine, 1,2,2-trimethyl-n-propylamine, 1-ethyl-1-methyl-n-propylamine, 1-ethyl-2-methyl-n-propylamine and 2-ethylhexylamine.

Illustrative examples of aralkyl monoamines include benzylamine, p-methoxycarbonylbenzylamine, p-ethoxycarbonylphenylbenzyl, p-methylbenzylamine, m-methylbenzylamine and o-methoxybenzylamine.

Illustrative examples of aryl monoamines include aniline, p-methoxycarbonylaniline, p-ethoxycarbonylaniline, p-methoxyaniline, 1-naphthylamine, 2-naphthylamine, anthranylamine, 1-aminopyrene, 4-biphenylylamine, o-phenylaniline, 4-amino-p-terphenyl and 2-aminofluorene.

In this case, the amount of organic monoamine used per equivalent of the cyanuric halide is set to preferably from 0.05 to 500 equivalents, more preferably from 0.05 to 120 equivalents, and even more preferably from 0.05 to 50 equivalents.

To hold down linearity and increase the degree of branching, the reaction temperature in this case is preferably from 60 to 150° C, more preferably from 80 to 150°C, and even more preferably from 80 to 120°C.

However, mixing of the three Ingredients --an organic monoamine, a cyanuric halide and a diaminoaryl compound-- may be carried out at a low temperature, in which case the temperature is set to preferably from about -50°C to about 50°C, more preferably from about -20°C to about 50°C, and even more preferably from -20°C to 10°C. After low-temperature charging, it is preferable to raise the temperature without interruption (i.e., in a single step) to the polymerization temperature and carry out the reaction.

Alternatively, the mixing of two ingredients --a cyanuric halide and a diaminoaryl compound-- may be carried out at a low temperature, in which case the temperature is set to preferably from about -50°C to about 50°C, more preferably from about -20°C to about 50°C, and even more preferably from -20°C to 10°C. After low-temperature charging, it is preferable to add the organic monoamine, raise the temperature without interruption (i.e., in a single step) to the polymerization temperature and carry out the reaction.

The reaction of the cyanuric halide with the diaminoaryl compound in the presence of such an organic monoamine may be carried out using an organic solvent like those mentioned above.

The crosslinking agent used in the carbon material-dispersed film-forming composition of the invention is not particularly limited, provided it is a compound having a substituent which is capable of reacting with the above-described triazine ring-containing polymer.

Examples of such compounds include melamine-based compounds having a crosslink-forming substituent such as a methylol group or a methoxymethyl group, substituted urea compounds, compounds having a crosslink-forming substituent such as an epoxy group or an oxetanyl group, compounds having an isocyanate group, compounds having a blocked isocyanate group, compounds having an acid anhydride group, compounds having a (meth)acryl group, and phenoplast compounds. From the standpoint of heat resistance and storage stability, compounds having an isocyanate group, a blocked isocyanate group or a (meth)acryl group are preferred. Compounds having an isocyanate group, and polyfunctional epoxy compounds and/or polyfunctional (meth)acrylate compounds which give photocurable compositions without the use of an initiator are especially preferred.

These compounds, when used for end group treatment of the polymer, should have at least one crosslink-forming substituent; when used for crosslinking treatment between polymers, they must have at least two crosslink-forming substituents.

The polyfunctional epoxy compounds are not particularly limited, provided they have two or more epoxy groups on the molecule.

Illustrative examples include tris(2,3-epoxypropyl) isocyanurate, 1,4-butanediol diglycidyl ether, 1,2-epoxy-4-(epoxyethyl)cyclohexane, glycerol triglycidyl ether, diethylene glycol diglycidyl ether, 2,6-diglycidylphenyl glycidyl ether, 1,1,3-tris[p-(2,3-epoxypropoxy)phenyl]propane, 1,2-cyclohexanedicarboxylic acid diglycidyl ester, 4,4'-methylenebis(N,N-diglycidylaniline), 3,4-epoxycyclohexylmethyl-3,4-epoxycyclohexane carboxylate, trimethylolethane triglycidyl ether, bisphenol A diglycidyl ether and pentaerythritol polyglycidyl ether.

Examples of commercial products that may be used include epoxy resins having at least two epoxy groups, such as YH-434 and YH-434L (from Tohto Kasei Co., Ltd.); epoxy resins having a cyclohexene oxide structure, such as Epolead GT-401, GT-403, GT-301 and GT-302, and also Celloxide 2021 and 3000 (all from Daicel Chemical Industries, Ltd.); bisphenol A-type epoxy resins such as Epikote (now "jER") 1001, 1002, 1003, 1004, 1007, 1009, 1010 and 828 (all from Japan Epoxy Resin Co., Ltd.); bisphenol F-type epoxy resins such as Epikote (now "jER") 807 (Japan Epoxy Resin Co., Ltd.); phenol-novolak type epoxy resins such as Epikote (now "jER") 152 and 154 (Japan Epoxy Resin Co., Ltd.), and EPPN 201 and 202 (Nippon Kayaku Co., Ltd.); cresol-novolak type epoxy resins such as EOCN-102, 103S, 104S, 1020, 1025 and 1027 (Nippon Kayaku Co., Ltd.), and Epikote (now "jER") 180S75 (Japan Epoxy Resin Co., Ltd.); alicyclic epoxy resins such as Denacol EX-252 (Nagase ChemteX Corporation), CY175, CY177 and CY179 (Ciba-Geigy AG), Araldite CY-182, CY-192 and CY-184 (Ciba-Geigy AG), Epiclon 200 and 400 (DIC Corporation), Epikote (now "jER") 871 and 872 (Japan Epoxy Resin Co., Ltd.), and ED-5661 and ED-5662 (Celanese Coating KK); and aliphatic polyglycidyl ethers such as Denacol EX-611, EX-612, EX-614, EX-622, EX-411, EX-512, EX-522, EX-421, EX-313, EX-314 and EX-321 (Nagase ChemteX Corporation).

The polyfunctional (meth)acrylate compounds are not particularly limited, provided they have two or more (meth)acryl groups on the molecule.

Illustrative examples include ethylene glycol diacrylate, ethylene glycol dimethacrylate, polyethylene glycol diacrylate, polyethylene glycol dimethacrylate, ethoxylated bisphenol A diacrylate, ethoxylated bisphenol A dimethacrylate, ethoxylated trimethylolpropane triacrylate, ethoxylated trimethylolpropane trimethacrylate, ethoxylated glycerol triacrylate, ethoxylated glycerol trimethacrylate, ethoxylated pentaerythritol tetraacrylate, ethoxylated pentaerythritol tetramethacrylate, ethoxylated dipentaerythritol hexaacrylate, polyglycerol monoethylene oxide polyacrylate, polyglycerol polyethylene glycol polyacrylate, dipentaerythritol hexaacrylate, dipentaerythritol hexamethacrylate, neopentyl glycol diacrylate, neopentyl glycol dimethacrylate, pentaerythritol triacrylate, pentaerythritol trimethacrylate, trimethylolpropane triacrylate, trimethylolpropane trimethacrylate, tricyclodecane dimethanol diacrylate, tricyclodecane dimethanol dimethacrylate, 1,6-hexanediol diacrylate and 1,6-hexanediol dimethacrylate.

The polyfunctional (meth)acrylate compound may be acquired as a commercial product, illustrative examples of which include NK Ester A-200, A-400, A-600, A-1000, A-9300 (tris(2-(acryloyloxy)ethyl) isocyanurate), A-9300-1CL, A-TMPT, UA-53H, 1G, 2G, 3G, 4G, 9G, 14G, 23G, ABE-300, A-BPE-4, A-BPE-6, A-BPE-10, A-BPE-20, A-BPE-30, BPE-80N, BPE-100N, BPE-200, BPE-500, BPE-900, BPE-1300N, A-GLY-3E, A-GLY-9E, A-GLY-20E, A-TMPT-3EO, A-TMPT-9EO, AT-20E, ATM-4E and ATM-35E (all from Shin-Nakamura Chemical Co., Ltd.); KAYARAD® DPEA-12, PEG400DA, THE-330 and RP-1040 (all from Nippon Kayaku Co., Ltd.); M-210 and M-350 (from Toagosei Co., Ltd.); KAYARAD® DPHA, NPGDA and PET 30 (Nippon Kayaku Co., Ltd.); NK Ester A-DPH, A-TMPT, A-DCP, A-HD-N, TMPT, DCP, NPG and HD-N (all from Shin-Nakamura Chemical Co., Ltd.); NK Oligo U-15HA (Shin-Nakamura Chemical Co., Ltd.); and NK Polymer Vanaresin GH-1203 (Shin-Nakamura Chemical Co., Ltd.).

The acid anhydride compounds are not particularly limited, provided they are carboxylic acid anhydrides obtained by the dehydration/condensation of two molecules of carboxylic acid. Illustrative examples include those having one acid anhydride group on the molecule, such as phthalic anhydride, tetrahydrophthalic anhydride, hexahydrophthalic anhydride, methyl tetrahydrophthalic anhydride, methyl hexahydrophthalic anhydride, nadic anhydride, methyl nadic anhydride, maleic anhydride, succinic anhydride, octyl succinic anhydride and dodecenyl succinic anhydride; and those having two acid anhydride groups on the molecule, such as 1,2,3,4-cyclobutanetetracarboxylic dianhydride, pyromellitic anhydride, 3,4-dicarboxy-1,2,3,4-tetrahydro-1-naphthalenesuccinic dianhydride, bicyclo[3.3.0]octane-2,4,6,8-tetracarboxylic dianhydride, 5-(2,5-dioxotetrahydro-3-furanyl)-3-methyl-3-cyclohexene-1,2-dicarboxylic anhydride, 1,2,3,4-butanetetracarboxylic dianhydride, 3,3',4,4'-benzophenonetetracarboxylic dianhydride, 3,3',4,4'-biphenyltetracarboxylic dianhydride, 2,2-bis(3,4-dicarboxyphenyl)hexafluoropropane dianhydride and 1,3-dimethyl-1,2,3,4-cyclobutanetetracarboxylic dianhydride.

The compounds having isocyanate groups are not particularly limited, provided they have two or more isocyanate groups on the molecule and, when exposed to an elevated temperature during heat curing, the isocyanate groups give rise to crosslinking reactions between the resins. Illustrative examples include polyisocyanates such as isophorone diisocyanate, 1,6-hexamethylene diisocyanate, methylene bis(4-cyclohexyl isocyanate) and trimethyl hexamethylene diisocyanate, as well as dimers and trimers thereof, and the reaction products of any of these with diols, triols, diamines or triamines.

The isocyanate compound may be acquired as a commercial product, illustrative examples of which include Millionate MT, MT-F, NM, NM100, MP-100, MR-200, MR-400 and MTL, Coronate 1130, 1050, 1057, 1108, 1120, 1316, MX, 1021, 1025, T-80, T65, T100, L, L-55E, L-45E, 2067, 2030, 2031, 2037, 2050, 2071, 2232, 2233, 342, 2014, 2041, 2222, HX, HXR, HXLV, HK, 2715, 2770, HX-T, HL, AP-M, BI-301, 2507, 3015E, 3030E and 3060, Nippolan 3109, 2304, 3114, 3124, 3230 and 3004, Aquanate 105, 110, 140 and 210, Woodlock, and Woodcure 220 and 300 (all available from Nippon Polyurethane Industry Co., Ltd.); Burnock D-750, D-800, DN-902S, DN-950, DN-955, DN-980, DN-981, DN-990 and DN-992 (all from DIC Corporation); and Duranate® 24A-100, 22A-75P, 21S-75E, TPA-100, TKA-100, MFA-75B, MHG-80B, TLA-100, TSA-100, TSS-100, TSE-100, P301-75E, E402-80B, E405-70B, AE700-100, D101, D201 and A201H (all from Asahi Kasei Chemicals Corporation.

In addition, in cases where a compound having isocyanate groups is to be used as the crosslinking agent, the compound may be rendered into a polyurethane crosslinking agent having terminal isocyanate groups by the concomitant use of a polyol compound.

Exemplary polyol compounds include low-molecular-weight polyol components such as acrylic polyol resins, polyester polyol resins, polyether polyol resins, polytetramethylene ether glycols (PTMG), polycarbonate diols and polycaprolactone diols, and thermoplastic urethane resins. These may be used singly, or two or more may be used in combination. A catalyst such as a commonly used organotin compound may be added to the urethane resin in order to control the curing reaction.

The polyol compound may be acquired as a commercial product, illustrative examples of which include Nippolan 121E, 125E, 179P, 131, 800, 1100, 4002, 4040, 4009, 4010, 3027, 164, 4073, 136, 152, 1004, 141, 4042, 163, 5018, 5035, 981, 980R, 982R, 963, 964, PC-61 (all from Nippon Polyurethane Industry Co., Ltd.); Acrydic A-801-P, A-817, A-837, A-848-RN, A-814, 57-773, A-829, 55-129, 49-394-IM, A-875-55, A-870, A-871, A-859-B, 52-666-BA, 52-668-BA, WZU-591, WXU-880, BL-616, CL-100 and CL-408, Burnock 11-408, D-210-80, D-161, J-517, D-128-65BA, D-144-65BA and D-145-55BA, Polylite RX-4800, OD-X-2251, OD-X-2523, OD-X-2547, OD-X-2555, OD-X-2420, OD-X-2692, OD-X-2586, OD-X-102, OD-X-668, OD-X-2420, OD-X-2068, OD-X-2108, OD-X-688, OD-X-2155, OD-X-640 and OD-X-2722 (all from DIC Corporation); the Adeka Polyether P series, BPX series, G series, T series, EDP series, SC and SP series, AM series, BM series, CM series, PR series, GR series and FC series, Adeka Newace NS-2400, YT-101, F7-67, #50, F-1212-29, YG-108, V-14-90 and Y-65-55 (all from Adeka Corporation); PTMG 650, 850, 1000, 1300, 1500, 1800, 2000 and 3000 (from Mitsubishi Chemical Corporation); and Praccel CD205PL, CD210, 220 and 220PL (Daicel Chemical Industries, Ltd.).

The compounds containing blocked isocyanate groups are not particularly limited, provided they are compounds having on the molecule at least two blocked isocyanate groups, i.e., isocyanate groups (-NCO) that have been blocked with suitable protecting groups, and wherein, upon exposure of the compound to an elevated temperature during heat curing, the protecting groups (blocking moieties) are removed by thermal dissociation and the isocyanate groups that form as a result induce crosslinking reactions with the resin. Such compounds are exemplified by compounds having on the molecule at least two groups of the following formula (which groups may be the same or may each differ).

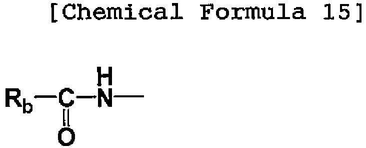

In the formula, R_{b} is an organic group serving as a blocking moiety.

Such a compound can be obtained by, for example, reacting a suitable blocking agent with the above-described compound having two or more isocyanate groups on the molecule.

Illustrative examples of the blocking agent include alcohols such as methanol, ethanol, isopropanol, n-butanol, 2-ethoxyhexanol, 2-N,N-dimethylaminoethanol, 2-ethoxyethanol and cyclohexanol; phenols such as phenol, o-nitrophenol, p-chlorophenol, and o-, m- or p-cresol; lactams such as ε-caprolactam; oximes such as acetone oxime, methyl ethyl ketone oxime, methyl isobutyl ketone oxime, cyclohexanone oxime, acetophenone oxime and benzophenone oxime; pyrazoles such as pyrazole, 3,5-dimethylpyrazole and 3-methylpyrazole; and thiols such as dodecanethiol and benzenethiol.

The compound containing blocked isocyanate groups may also be acquired as a commercial product, illustrative examples of which include B-830, B-815N, B-842N, B-870N, B-874N, B-882N, B-7005, B7030, B-7075 and B-5010 (all from Mitsui Chemicals Polyurethane, Inc.); Duranate® 17B-60PX, TPA-B80E, MF-B60X, MF-K60X and E402-B80T (all from Asahi Kasei Chemicals Corporation); and KarenzMOI-BM® (Showa Denko KK).

The aminoplast compounds are not particularly limited, provided they are compounds which have at least two methoxymethylene groups on the molecule. Illustrative examples include the following melamine-type compounds: compounds of the Cymel® series, such as hexamethoxymethylmelamine (Cymel® 303), tetrabutoxymethylglycoluril (Cymel® 1170) and tetramethoxymethylbenzoguanamine (Cymel® 1123) (all from Nihon Cytec Industries, Inc.); and compounds of the Nikalac® series, including the methylated melamine resins Nikalac® MW-30HM, MW-390, MW-100LM and MX-750LM, and the methylated urea resins Nikalac® MX-270, MX-280 and MX-290 (all from Sanwa Chemical Co., Ltd.).

The oxetane compounds are not particularly limited, provided they are compounds which have at least two oxetanyl groups on the molecule. Examples include the oxetanyl group-bearing compounds OXT-221, OX-SQ-H and OX-SC (from Toagosei Co., Ltd.).

Phenoplast compounds are compounds which have at least two hydroxymethylene groups on the molecule. Upon exposure to an elevated temperature during heat curing, crosslinking reactions proceed by way of dehydration/condensation reactions with the polymer of the invention.

Illustrative examples of phenoplast compounds include 2,6-dihydroxymethyl-4-methylphenol, 2,4-dihydroxymethyl-6-methylphenol, bis(2-hydroxy-3-hydroxymethyl-5-methylphenyl)methane, bis(4-hydroxy-3-hydroxymethyl-5-methylphenyl)methane, 2,2-bis(4-hydroxy-3,5-dihydroxymethylphenyl)propane, bis(3-formyl-4-hydroxyphenyl)methane, bis(4-hydroxy-2,5-dimethylphenyl)formylmethane and α,α-bis(4-hydroxy-2,5-dimethylphenyl)-4-formyltoluene.

The phenoplast compounds may also be acquired as commercial products, illustrative examples of which include 26DMPC, 46DMOC, DM-BIPC-F, DM-BIOC-F, TM-BIP-A, BISA-F, BI25X-DF and BI25X-TPA (all from Asahi Organic Chemicals Industry Co., Ltd.).

Of these, from the standpoint of suppressing a decrease in the refractive index due to the addition of a crosslinking agent and also having the curing reaction proceed rapidly, a polyfunctional (meth)acrylate compounds is preferred. Of such compounds, polyfunctional (meth)acrylate compounds having the following isocyanuric acid skeleton are more preferred because of their excellent compatibility with the triazine ring-containing polymer.

Illustrative examples of polyfunctional (meth)acrylate compounds having such a skeleton include NK Ester A-9300 and A-9300-1CL (both available from Shin-Nakamura Chemical Co., Ltd.). 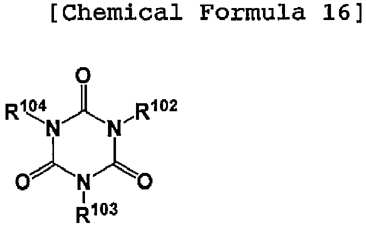 In this formula, R¹⁰² to R¹⁰³ are each independently monovalent organic groups having at least one terminal (meth)acryl group.

From the standpoint of further improving the curing rate and also increasing the solvent resistance, acid resistance and alkali resistance of the resulting cured film, it is preferable to use a polyfunctional (meth)acrylate compound (referred to below as the "low-viscosity crosslinking agent") that is a liquid at 25°C and has a viscosity of 5,000 mPa·s or less, preferably from 1 to 3,000 mPa·s, and more preferably from 1 to 500 mPa·s, either singly or as a combination of two or more thereof, or, alternatively, in combination with the above-described polyfunctional (meth)acrylate compound having an isocyanuric acid skeleton.

Such low-viscosity crosslinking agents may also be acquired as commercial products. Illustrative examples of these polyfunctional (meth)acrylate compounds include crosslinking agents having a relatively long chain length between the (meth)acryl groups, such as NK Ester A-GLY-3E (85 mPa·s, 25°C), A-GLY-9E (95 mPa·s, 25°C), A-GLY-20E (200 mPa·s, 25°C), A-TMPT-3EO (60 mPa·s, 25°C), A-TMPT-9EO, ATM-4E (150 mPa·s, 25°C) and ATM-35E (350 mPa·2, 25°C) (all available from Shin-Nakamura Chemical Co., Ltd.).

In addition, to enhance the alkali resistance of the resulting cured film, at least one of NK Ester A-GLY-20E (Shin-Nakamura Chemical Co., Ltd.) and NK Ester ATM-35E (Shin-Nakamura Chemical Co., Ltd.) is preferably used in combination with the above-described polyfunctional (meth)acrylate compound having an isocyanuric acid skeleton.

The above crosslinking agent may be used singly or two or more may be used in combination. The amount of crosslinking agent used is preferably from 1 to 100 parts by weight per 100 parts by weight of the triazine ring-containing polymer. However, taking solvent resistance into account, the lower limit is preferably 2 parts by weight, and more preferably 5 parts by weight. To control the refractive index, the upper limit is preferably 20 parts by weight, and more preferably 15 parts by weight.

In decorative paint and ink applications, the amount of crosslinking agent used per 100 parts by weight of the triazine ring-containing polymer is preferably from 1 to 1,000 parts by weight. However, taking solvent resistance into account, the lower limit is preferably 2 parts by weight, and more preferably 5 parts by weight. To control the dispersibility of the carbon material, the upper limit is preferably 300 parts by weight, and more preferably 100 parts by weight.

Initiators for the respective crosslinking agents may be included in the carbon material-dispersed film-forming composition of the invention. As mentioned above, when a polyfunctional epoxy compound and/or a polyfunctional (meth)acrylate compound is used as the crosslinking agent, photocuring proceeds even without the use of an initiator, giving a cured film, although it is acceptable to use an initiator in such cases.

When a polyfunctional epoxy compound is used as the crosslinking agent, use may be made of a photoacid generator or a photobase generator.

The photoacid generator used may be one that is suitably selected from among known photoacid generators. For example, use may be made of an onium salt derivative such as a diazonium salt, a sulfonium salt or an iodonium salt.

Illustrative examples include aryldiazonium salts such as phenyldiazonium hexafluorophosphate, 4-methoxyphenyldiazonium hexafluoroantimonate and 4-methylphenyldiazonium hexafluorophosphate; diaryliodonium salts such as diphenyliodonium hexafluoroantimonate, di(4-methylphenyl)iodonium hexafluorophosphate and di(4-tert-butylphenyl)iodonium hexafluorophosphate; and triarylsulfonium salts such as triphenylsulfonium hexafluoroantimonate, tris(4-methoxyphenyl)sulfonium hexafluorophosphate, diphenyl-4-thiophenoxyphenylsulfonium hexafluoroantimonate, diphenyl-4-thiophenoxyphenylsulfonium hexafluorophosphate, 4,4'-bis(diphenylsulfonio)phenylsulfide bishexafluoroantimonate, 4,4'-bis(diphenylsulfonio)phenylsulfide bishexafluorophosphate, 4,4'-bis(di(β-hydroxyethoxy)phenylsulfonio]phenylsulfide bishexafluoroantimonate, 4,4'-bis[di(β-hydroxyethoxy)phenylsulfonio]phenylsulfide bishexafluorophosphate, 4-[4'-(benzoyl)phenylthio]phenyl-di(4-fluorophenyl)sulfonium hexafluoroantimonate and 4-[4'-(benzoyl)phenylthio]phenyl-di(4-fluorophenyl)sulfonium hexafluorophosphate.

Commercial products may be used as these onium salts. Illustrative examples include San-Aid SI-60, SI-80, SI-100, SI-60L, SI-80L, SI-100L, SI-L145, SI-L150, SI-L160, SI-L110 and SI-L147 (all available from Sanshin Chemical Industry Co., Ltd.); UVI-6950, UVI-6970, UVI-6974, UVI-6990 and UVI-6992 (all available from Union Carbide); CPI-100P, CPI-100A, CPI-200K and CPI-200S (all available from San-Apro Ltd.); Adeka Optomer SP-150, SP-151, SP-170 and SP-171 (all available from Adeka Corporation); Irgacure 261 (BASF); CI-2481, CI-2624, CI-2639 and CI-2064 (Nippon Soda Co., Ltd.); CD-1010, CD-1011 and CD-1012 (Sartomer Company); DS-100, DS-101, DAM-101, DAM-102, DAM-105, DAM-201, DSM-301, NAI-100, NAI-101, NAI-105, NAI-106, SI-100, SI-101, SI-105, SI-106, PI-105, NDI-105, BENZOIN TOSYLATE, MBZ-101, MBZ-301, PYR-100, PYR-200, DNB-101, NB-101, NB-201, BBI-101, BBI-102, BBI-103 and BBI-109 (all from Midori Kagaku Co., Ltd.); PCI-061T, PCI-062T, PCI-020T and PCI-022T (all from Nippon Kayaku Co., Ltd.); and IBPF and IBCF (Sanwa Chemical Co., Ltd.).

The photobase generator used may be one suitably selected from among known photobase generators. For example, use may be made of Co-amine complex-type, oxime carboxylic acid ester-type, carbamic acid ester-type and quaternary ammonium salt-type photobase generators.

Illustrative examples include 2-nitrobenzylcyclohexyl carbamate, triphenylmethanol, O-carbamoylhydroxylamide, O-carbamoyloxime, [[(2,6-dinitrobenzyl)oxy]carbonyl]cyclohexylamine, bis[[(2-nitrobenzyl)oxy]carbonyl]hexane-1,6-diamine, 4-(methylthiobenzoyl)-1-methyl-1-morpholinoethane, (4-morpholinobenzoyl)-1-benzyl-1-dimethylaminopropane, N-(2-nitrobenzyloxycarbonyl)pyrrolidine, hexaamminecobalt(III) tris(triphenylmethylborate), 2-benzyl-2-dimethylamino-1-(4-morpholinophenyl)butanone, 2,6-dimethyl-3,5-diacetyl-4-(2'-nitrophenyl)-1,4-dihydropyridine and 2,6-dimethyl-3,5-diacetyl-4-(2',4'-dinitrophenyl)-1,4-dihydropyridine.

A commercial product may be used as the photobase generator. Illustrative examples include TPS-OH, NBC-101 and ANC-101 (all available under these product names from Midori Kagaku Co., Ltd.).

In cases where a photoacid or photobase generator is used, the generator is used in the range of preferably 0.1 to 15 parts by weight, and more preferably 1 to 10 parts by weight, per 100 parts by weight of the polyfunctional epoxy compound.

Also, from 1 to 100 parts by weight of an epoxy resin curing agent may be optionally included per 100 parts by weight of the polyfunctional epoxy compound.

In cases where a poly(meth)acrylate compound is used, a photoradical initiator may be employed.

A known photoradical initiator may be suitably selected and used for this purpose. Exemplary photoradical initiators include acetophenones, benzophenones, Michler's benzoyl benzoate, amyloxime ester, oxime esters, tetramethylthiuram monosulfide and thioxanthones.

Photocleavable photoradical initiators are especially preferred. Photocleavable photoradical initiators are listed on page 159 of Saishin UV Koka Gijutsu [Recent UV Curing Technology] (publisher, K. Takausu; published by Gijutsu Joho Kyokai KK; 1991).

Examples of commercial photoradical initiators include those available from BASF under the trade names Irgacure 127, 184, 369, 379, 379EG, 651, 500, 754, 819, 903, 907, 784, 2959, CGI1700, CGI1750, CGI1850, CG24-61, OXE01 and OXE02, and the trade names Darocur 1116, 1173 and MBF; that available from BASF under the trade name Lucirin TPO; that available from UCB under the trade name Ubecryl P36; and those available under the trade names Esacure KIP150, KIP65LT, KIP100F, KT37, KT55, KTO46 and KIP75/B from the Fratelli Lamberti Company.

The photoradical initiator is used in the range of preferably from 0.1 to 200 parts by weight, and more preferably from 1 to 150 parts by weight, per 100 parts by weight of the poly(meth)acrylate compound.

The carbon material used in the carbon material-dispersed film-forming composition of the invention is included in order to increase the electrical conductivity, slidability and light shielding properties of the cured film to be obtained, and may be suitably selected from among known carbon materials. Illustrative examples include CNTs, carbon nanohorns, fullerene, graphene, carbon black, ketjen black, graphite and carbon fibers, with CNTs or carbon black being preferred. In this invention, these may be used singly or two or more may be used in admixture.

Carbon nanotubes are produced by, for example, an arc discharge process, chemical vapor deposition (CVD) or laser ablation. The CNTs used in this invention may be obtained by any of these methods. CNTs are categorized as single-walled CNTs composed of a single cylindrically rolled graphene sheet (abbreviated below as "SWCNTs"), double-walled CNTs composed of two concentrically rolled graphene sheets (abbreviated below as "DWCNTs"), and multi-walled CNTs composed of a plurality of concentrically rolled graphite sheets (abbreviated below as "MWCNTs"). Any of these CNTs may be used in the invention.

Specific examples of commercial products that may be used include the following:
KH SWCNT ED, EP and HP (all available from KH Chemicals);
ASA-100F, AST-100F, ASP-100F, CMP 310F, 320F, 330F, 340F, 1340F, CM 95 and 100, and PE-100 (from Hanwha Nanotech);
SWNT 1 and 2, DWNT 1 and 2, L. B-MWNTs 10 and 10A, Aligned-MWNT, HBNT Herrin-bone, MWNTs (from Shenzhen Nanotech);
SWNT FH-A, FH-P, APJ, SO, MWNT (Meijo Nano Carbon);
Nanocyl 7000 (Nanocyl SA);
Baytube C 150P and 70P (Bayer);
AMC (Ube Industries, Ltd.);
VGCF-H (Showa Denko KK);
MWNT-7 (Hodogaya Chemical Co.);
C tube 100 (CNT);
FloTube 9000, 7000, and 2000 (CNano Technology); and
SWNTs 99 wt %, OH Functionalized, COOH Functionalized, NH₂ Functionalized, 90 wt %, COOH, 60 wt %, Short SWNTs 90 wt %, OH, COOH, 60 wt %, DWNTs, MWNTs 99 wt % <20 nm, 95 wt % <8 nm OD, 8-15 nm OD, 10-20 nm OD, 20-30 nm OD, 30-50 nm, >50 nm OD, TWNTs (Cheap Tubes, Inc.).

Carbon blacks are produced by, for example, the furnace method, channel method, acetylene method and thermal method. The carbon black used in this invention may be obtained by any suitable method.

Illustrative examples of commercial products that may be used include the following:
Raven 5000 Ultra III, 5000 Ultra II, 7000, 3500, 2500 Ultra, 1500, 1255, 1200, 1170, 1100 Ultra, 1060 Ultra, 1040, 1035, 1020, L, 1000, 890, 850, 460, 450, 420, 410, 22, 16, 14, H2O and Conductex 975 Ultra (all available from Columbian Carbon Co.);
#2650, #2600, #2350, #2300, #1000, #980, #970, #960, #950, #900, #850, MCF88, MA600, #750B, #650B, #52, #47, #45, #45L, #44, #40, #33, #32, #30, #25, #20, #10, #5, #95, #85, #260, MA77, MA7, MA8, MA11, MA100, MA100R, MA100S, MA230, MA220, MA14, #4000B, #3030B, #3050B, #3230B and #3400B (Mitsubishi Chemical Corporation);
Printex 95, 90, 85, 80, 75, 60, 60-A, 55, 45, 40, 35, 30, 25, 12, alpha, A, L6, L, P, 140U, 140V, U, V, XE2-B, XE2, ES34, ES23, ES22, F85, F80, Falpha, FP, L6SQ, LSQ, alpha SQ, 300, 200, G, Color Black FW200, FW2, FW2V, FW285, FW1, FW18, S170, S160, Special Black 550, 350, 250, 100, 6, 5, 4, 4A, Hiblack 970LB, 930L, 890, 600L, 40B2, 40L, 45LB, 30L, 30, 20L, 200L, 20, 10, 5L, NIPex 180IQ, 170IQ, 1601Q, 150, 90, 70, 60, 35, NEROX 600, 605, 510, 505, 305, 5600, 3500, 2500, 1000, LampBlack 101, Arosperse 15, XPB235 (Orion Engineered Carbons (formerly Degussa);
Asahi #8, #15, #22K, #35, #15HS, #50HG, #50U, #51, #52, #60HN, #60U, #66, #70L, AX-015 and F-200, Asahi Thermal, SUNBLACK 900, 910, 935, 960, 300, 320, 700, 710, 720, 805, 200, 210, 220, 230, 240, 250, 260, 270, 280, 400, 410, 600, X15, X25, X45, X55 and X65 (Asahi Carbon Co., Ltd.);
Tokablack #8500/F, #8300/F, #7550SB/F, #7400, #7360SB, #7350/F, #7270SB, #7100F, #7050, #5500, #4500, #4400, #4300, #3855, #3845, #3800, ordinary carbon black, Aqua-Black 162 and 001 (Tokai Carbon Co., Ltd.); and
Monarch 120, 280, 460, 700, 800, 880, 900, 1000, 1100, 1300, 1400, 2000, 4630, Regal 99, 99R, 415, 415R, 250, 250R, 330, 330R, 400R, 550R, 660R, Vulcan XC-72R, Black Pearls 480, Pearls 130, Elfex-8 and Mogul L (Cabot Corporation).

The primary particle size of these carbon blacks, although not particularly limited, is preferably from 3 to 500 nm, and more preferably from 10 to 100 nm. To further increase the blackness of the carbon black, the primary particle size is even more preferably from 10 to 50 nm.

The solvent may be any capable of forming a composition in which the carbon material is dispersed. Illustrative examples include water, toluene, p-xylene, o-xylene, m-xylene, ethylbenzene, styrene, ethylene glycol dimethyl ether, propylene glycol monomethyl ether, ethylene glycol monomethyl ether, propylene glycol, propylene glycol monoethyl ether, ethylene glycol monoethyl ether, ethylene glycol monoisopropyl ether, ethylene glycol methyl ether acetate, propylene glycol monomethyl ether acetate, ethylene glycol ethyl ether acetate, diethylene glycol dimethyl ether, propylene glycol monobutyl ether, ethylene glycol monobutyl ether, diethylene glycol diethyl ether, dipropylene glycol monomethyl ether, diethylene glycol monomethyl ether, dipropylene glycol monoethyl ether, diethylene glycol monoethyl ether, triethylene glycol dimethyl ether, diethylene glycol monoethyl ether acetate, diethylene glycol, 1-octanol, ethylene glycol, hexylene glycol, trimethylene glycol, 1-methoxy-2-butanol, cyclohexanol, diacetone alcohol, furfuryl alcohol, tetrahydrofurfuryl alcohol, propylene glycol, benzyl alcohol, 1,3-butanediol, 1,4-butanediol, 2,3-butanediol, γ-butyrolactone, acetone, methyl ethyl ketone, methyl isopropyl ketone, diethyl ketone, methyl isobutyl ketone, methyl n-butyl ketone, cyclopentanone, cyclohexanone, ethyl acetate, isopropyl acetate, n-propyl acetate, isobutyl acetate, n-butyl acetate, ethyl lactate, methanol, ethanol, isopropanol, tert-butanol, allyl alcohol, n-propanol, 2-methyl-2-butanol, isobutanol, n-butanol, 2-methyl-1-butanol, 1-pentanol, 2-methyl-1-pentanol, 2-ethylhexanol, 1-methoxy-2-propanol, tetrahydrofuran, 1,4-dioxane, N,N-dimethylformamide, N,N-dimethylacetamide (DMAc), N-methylpyrrolidone, 1,3-dimethyl-2-imidazolidinone, dimethyl sulfoxide and N-cyclohexyl-2-pyrrolidinone. These may be used singly or two or more may be used in combination.

The solids concentration of the carbon material in the carbon material-dispersed film-forming composition is not particularly limited. In the composition of the invention, this may be set to from about 0.0001 to about 50 wt %, and preferably from about 0.0001 to about 20 wt %.

The method of dispersing the carbon material is not particularly limited. For example, use may be made of ultrasonic treatment or of a wet jet mill, ball mill, bead mill, paint shaker, basket mill, Dyno-Mill, Ultra Visco Mill or an annular disperser. If necessary, the carbon material-dispersed film-forming composition obtained with these may be further treated using a known filtration system or separator.

The mixing ratio of the triazine ring-containing polymer and the carbon material in the inventive composition is not particularly limited, and may be set to a weight ratio of from about 1000:1 to about 1:100.

The concentration of the triazine ring-containing polymer within the composition that uses an organic solvent is not particularly limited, provided it is a concentration that is able to solubilize the carbon material in the organic solvent. In this invention, the concentration within the composition may be set to preferably from about 0.001 to about 50 wt %, and more preferably from about 0.005 to about 20 wt %.

In addition to the triazine ring-containing polymer, crosslinking agent, carbon material and solvent, other ingredients such as leveling agents, surfactants, pigments, dyes and silane coupling agents may be included in the carbon material-dispersed film-forming composition of the invention, insofar as this does not adversely affect the objects of the invention.

Illustrative examples of surfactants include the following nonionic surfactants: polyoxyethylene alkyl ethers such as polyoxyethylene lauryl ether, polyoxyethylene stearyl ether, polyoxyethylene cetyl ether and polyoxyethylene oleyl ether; polyoxyethylene alkylaryl ethers such as polyoxyethylene octyl phenol ether and polyoxyethylene nonyl phenol ether; polyoxyethylene-polyoxypropylene block copolymers; sorbitan fatty acid esters such as sorbitan monolaurate, sorbitan monopalmitate, sorbitan monostearate, sorbitan monooleate, sorbitan trioleate and sorbitan tristearate; and polyoxyethylene sorbitan fatty acid esters such as polyoxyethylene sorbitan monolaurate, polyoxyethylene sorbitan monopalmitate, polyoxyethylene sorbitan monostearate, polyoxyethylene sorbitan trioleate and polyoxyethylene sorbitan tristearate; and additionally include fluorosurfactants such as those available under the trade names Eftop EF301, EF303 and EF352 (from Mitsubishi Materials Electronic Chemicals Co., Ltd. (formerly Jemco Inc.)), Megafac F171, F173, R-08, R-30, R-40, F-553, F-554, RS-75 and RS-72-K (DIC Corporation), Fluorad FC430 and FC431 (Sumitomo 3M, Ltd.), AsahiGuard AG710 and Surflon S-382, SC101, SC102, SC103, SC104, SC105 and SC106 (Asahi Glass Co., Ltd.); and also the organosiloxane polymers KP341 (Shin-Etsu Chemical Co., Ltd.) and BYK-302, BYK-307, BYK-322, BYK-323, BYK-330, BYK-333, BYK-370, BYK-375 and BYK-378 (BYK-Chemie Japan KK).

These surfactants may be used singly or two or more may be used in combination. The amount of surfactant used per 100 parts by weight of the triazine ring-containing polymer is preferably from 0.0001 to 5 parts by weight, more preferably from 0.001 to 1 part by weight, and even more preferably from 0.01 to 0.5 part by weight.

These other ingredients may be added in any step during preparation of the inventive composition.

Exemplary pigments include carbon-based pigments such as coal tar and coal tar pitch, and black inorganic pigments, including titanium oxide-based pigments such as titanium black, iron oxide-based pigments and copper oxide. Exemplary dyes include black dyes, red dyes, yellow dyes and blue dyes.

For example, use may be made of the following commercial products.

Titanium black: 12S, 13M and 13M-C (from Mitsubishi Materials Corporation).

Black dyes: VALIFAST BLACK 1807, 1821, 3804, 3810, 3820, 2830, 2840, 3866 and 3870, Oil Black 803, 830, 860, BS, HBB and NO5 (all from Orient Chemical Industries, Co., Ltd.), and Aizen Spilon Black MHS-Liquid (Hodogaya Chemical Co.).

Red dyes: VALIFAST RED 1308, 1320, 1355, 1360, 1364, 1388, 2320, 3108, 3304, 3306, 3311, 3312 and 3320, OIL RED 330, 5B, OG and RR (all from Orient Chemical Industries, Co., Ltd.), and Aizen Spilon Red BEHS-Liquid (Hodogaya Chemical Co.).

Yellow dyes: VALIFAST YELLOW 1101, 1108, 1109, 1151, 1171, 3108, 3120, 3150, 3170, 3180, 4120 and 4121, OIL YELLOW 107, 129, 136, 3G and GG-S (all from Orient Chemical Industries, Co., Ltd.), and Aizen Spilon Yellow RH S-Liquid (Hodogaya Chemical Co.).

Blue dyes: VALIFAST Blue 1063, 1605, 1621, 2606, 2620, 2650 and 2670, OIL BLUE 2N, 613, 630 and 650M (Orient Chemical Industries, Co. Ltd.).

These pigments and dyes may be used singly or two or more may be used in combination. The amount of pigments and dyes used is preferably from 0.001 to 20 wt %, and more preferably from about 0.005 to about 10 wt %, per 100 parts by weight of the triazine ring-containing polymer.

Other ingredients may be added in any step when preparing the composition of the invention.

The desired cured film may be formed by applying the carbon material-dispersed film-forming composition of the invention onto a substrate, then optionally heating to evaporate the solvent, and subsequently heating or carrying out light exposure to cure the composition.

Any suitable method may be used for applying the composition onto a substrate, such as spin coating, dipping, flow coating, inkjet printing, jet dispensing, spraying, bar coating, gravure coating, slit coating, roll coating, transfer printing, brush coating, blade coating and air knife coating.

Examples of the substrate include, but are not particularly limited to, silicon, indium-tin oxide (ITO)-coated glass, indium zinc oxide (IZO)-coated glass, polyethylene terephthalate (PET), plastic, glass, quartz and ceramic. Use can also be made of a flexible substrate having pliability.

Baking to evaporate off the solvent is carried out at a temperature which, although not particularly limited, may be set to, for example, from 40 to 400°C.

The baking process is not particularly limited. For example, evaporation may be effected using a hot plate or an oven, such evaporation being carried out in a suitable atmosphere, such as in open air, in nitrogen or another inert gas, or in a vacuum.

With regard to the bake temperature and time, conditions which are compatible with the processing steps for the target electronic device should be selected. The bake conditions should be selected in such a way that the physical values of the resulting film conform to the required characteristics of the electronic device.

The conditions in cases where exposure to light is carried out are also not particularly limited. For example, the exposure energy and time should be ones that are suitable for the triazine ring-containing polymer and crosslinking agent that are used.

Because the cured film of the invention that has been thus obtained is able to achieve a high heat resistance, high refractive index and low volume shrinkage, it can be advantageously used in the fields of electronic devices and optical materials, including components in the fabrication of, for example, liquid-crystal displays, organic EL displays, touchscreens, optical semiconductor devices (LEDs), solid-state image sensors, organic thin-film solar cells, dye-sensitized solar cells, organic thin-film transistors (TFTs), lenses, prisms, cameras, binoculars, microscopes and semiconductor exposure systems, and also in the field of decorative paints and inks such as for the surfaces of various types of components. Of these, the inventive cured film can be preferably used in internal reflection applications such as camera lens.

Also, to improve the planarity of the resulting cured film and prevent physical loss of the carbon material, a composition similar to the carbon material-dispersed film-forming composition but from which the carbon material has been excluded may be prepared as a planarizing material and used to form a planarizing film over the cured film (carbon material-dispersed film).

Specific examples of the triazine ring-containing polymer, crosslinking agent and the like in this planarizing material, as well as the amounts in which these ingredients are included and the film-forming method, are as described above.

### EXAMPLES

Synthesis Examples and Examples are given below to more fully illustrate the invention, although the invention is not limited by these Examples. The instruments, etc. used for measurement in the Examples were as follows.
[¹H-NMR Spectrum]
   Instruments: Varian NMR System 400NB (400 MHz) JEOL-ECA700 (700 MHz)
   Solvent: DMSO-d₆
   Internal standard: Tetramethylsilane (TMS) (δ 0.0 ppm)
[GPC]
   Instrument: HLC-8200 GPC (Tosoh Corporation)
   Columns: Shodex KF-804L + KF-805L
   Column temperature: 40°C
   Solvent: Tetrahydrofuran (THF)
   Detector: UV (254 nm)
   Calibration curve: Polystyrene standard
[Ellipsometer]
   Instrument: VASE multiple incident angle spectroscopic ellipsometer (JA Woollam Japan)
[Thermogravimetric/Differential Thermal Analyzer (TG-DTA)]
   Instrument: TG-8120 (Rigaku Corporation)
   Temperature ramp-up rate: 10°C/min
   Measurement temperatures: 25°C to 750°C
[Haze Meter]
   Instrument: NDH 5000 (Nippon Denshoku Industries Co., Ltd.)
[Ultraviolet/Visible/Near-Infrared Spectrophotometer]
   Instrument: UV-3600 (Shimadzu Corporation)
[Particle Size Analyzer]
   Instrument: Microtrac UPA-EX (Nikkiso Co., Ltd.)
[Viscometer]
   Instrument: VISCOMETER TV-22 (Toki Sangyo Co., Ltd.)

### [1] Synthesis of Triazine Ring-Containing Hyperbranched Polymers

### [Synthesis Example 1] Synthesis of HB-TmDA

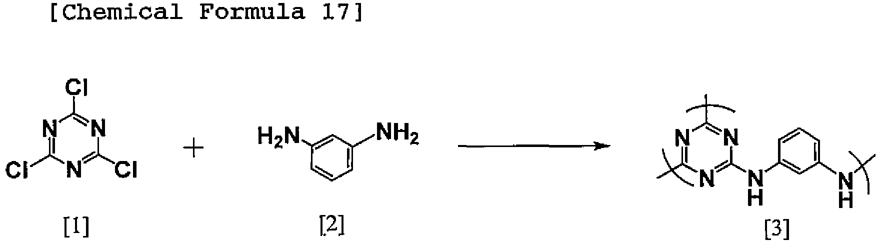

Under nitrogen, 456.02 g of DMAc was added to a 1,000 mL four-neck flask and cooled to -10°C in an acetone-dry ice bath, following which 84.83 g (0.460 mol) of 2,4,6-trichloro-1,3,5-triazine [1] (Evonik Degussa) was added and dissolved therein. Next, both a solution of 62.18 g (0.575 mol) of m-phenylenediamine dissolved in 304.01 g of DMAc and also 14.57 g (0.156 mol) of aniline were added dropwise. After dropwise addition, the flask contents were stirred for 30 minutes, then the reaction mixture was added dropwise over a period of 1 hour using a fluid transfer pump to a reactor consisting of a 2,000 mL four-neck flask to which had been added 621.85 g of DMAc and which was preheated on an oil bath to 85° C. Following addition of the reaction mixture, stirring was carried out for 1 hour, thereby effecting polymerization.

Next, 113.95 g (1.224 mol) of aniline was added and the flask contents were stirred for 1 hour, bringing the reaction to completion. The system was cooled to room temperature in an ice bath, after which 116.36 g (1.15 mol) of triethylamine was added dropwise and 30 minutes of stirring was carried out, thereby quenching the hydrochloric acid. The hydrochloride that settled out was then removed by filtration. The filtered reaction mixture was reprecipitated in a mixed solution of 28% ammonia water (279.29 g) and 8,820 g of deionized water. The precipitate was filtered, dried in a vacuum desiccator at 150°C for 8 hours, then redissolved in 833.1 g of THF and reprecipitated in 6,665 g of deionized water. The resulting precipitate was filtered, then dried in a vacuum desiccator at 150°C for 25 hours, yielding 118.0 g of the target polymeric compound [3] (referred to below as "HB-TmDA40").

FIG. 1 shows the measured ¹H-NMR spectrum for HB-TmDA40. The resulting HB-TmDA40 was a compound having the structural units shown in formula (1). The polystyrene-equivalent weight-average molecular weight Mw of HB-TmDA40, as measured by GPC, was 4,300, and the polydispersity Mw/Mn was 3.44.

### (1) Heat Resistance Test

TG-DTA measurement was carried out on the HB-TmDA40 obtained in Synthesis Example 1, whereupon the 5% weight loss temperature was 419°C. The results are shown in FIG. 2.

### (2) Measurement of Refractive Index

The HB-TmDA40 obtained in Synthesis Example 1 (0.5 g) was dissolved in 4.5 g of cyclohexanone, giving a clear, light yellow-colored solution. Using a spin coater, the resulting polymer varnish was spin-coated onto a glass substrate at 200 rpm for 5 seconds and at 2,000 rpm for 30 seconds, following which the solvent was removed by heating at 150° C for 1 minute and at 250°C for 5 minutes, thereby giving a film. Upon measurement, the resulting film was found to have a refractive index at 550 nm of 1.790.

### [Production Example 1]

A 20 wt % solution (referred to below as "HB-TmDA40V") was prepared by dissolving 40 g of the HB-TmDA obtained in Synthesis Example 1 and 153.6 g of cyclohexanone and 6.4 g of deionized water.

### [Production Example 2]

A 20 wt % solution (referred to below as "20E-35EV") was prepared by dissolving 1.0 g of ethoxylated glycerol triacrylate (NK Ester A-GLY-20E, from Shin-Nakamura Chemical Co., Ltd.) and 0.3 g of ethoxylated pentaerythritol tetraacrylate (NK Ester ATM-35E, from Shin-Nakamura Chemical Co., Ltd.) in 5.0 g of cyclohexanone and 0.2 g of deionized water.

### [Production Example 3]

A cyclohexanone/deionized water mixed solvent (referred to below as "CHN/water") was prepared by mixing together 480.0 g of cyclohexanone and 20.0 g of deionized water.

### [Production Example 4] Production of SWCNT Dispersion 1

The HB-TmDA40V (0.1 g) obtained in Production Example 1 and 39.9 g of CHN/water were mixed together, and 0.01 g of SWCNTs (ASP-100F, from Hanwha Nanotech) was added to the mixture. This was sonicated for 1 hour at room temperature using a bath-type sonicator (Fine FU-6H, from TGK Co., Ltd.), then centrifuged using a small high-speed refrigerated centrifuge (SRX-201, from Tomy Seiko Co., Ltd.) at 10,000G for 1 hour, thereby giving a clear black SWCNT Dispersion 1 as the supernatant.

The ultraviolet-visible-near infrared absorption spectrum for the resulting SWCNT Dispersion 1 was measured, whereupon semiconductive S₁₁ band (1,300 to 850 nm) and S₂₂ band (850 to 600 nm) absorption and also metallic band (600 to 450 nm) absorption were clearly observed, confirming that the SWCNTs are individually dispersed (see FIG. 3).

### [Production Example 5] Production of SWCNT Dispersion 2

Aside from using 0.1 g of 20E-35EV, SWCNT Dispersion 2 was prepared in the same way as in Example 1. The ultraviolet-visible-infrared absorption spectrum was measured, whereupon absorption in the above bands was not observed, thus confirming that the SWCNT dispersibility was low (see FIG. 4).

### [Example 1] Production of Photocurable Composition 1

A varnish (referred to below as "HB-TmDA40VF1") having a total solids concentration of 0.1 wt % was prepared by adding together 20.0 g of SWCNT Dispersion 1 prepared in Production Example 4, 2 mg of a 60 wt % solution of A-GLY-20E in CHN/water, 1 mg of a 60 wt % ATM-35E CHN/water solution, and 0.01 g of a 20 wt % solution of the photoradical initiator Irgacure OXE-02 (BASF) in CHN/water.

### [Comparative Example 1] Preparation of Photocurable Composition 2

Aside from using SWCNT Dispersion 2 prepared in Production Example 5, a varnish (referred to below as "20E-35EVF1") having a total solids concentration of 0.1 wt % was prepared in the same way as in Example 1.

### [Example 2] Photocured Film 1

The HB-TmDA40VF1 varnish prepared in Example 1 was spin-coated onto a soda-lime-silica glass substrate with a spin coater at 100 rpm for 5 seconds and at 200 rpm for 30 seconds, baked for 3 minutes at 130°C on a hot plate, and then cured with a high-pressure mercury vapor lamp at a cumulative exposure dose of 400 mJ/cm², giving Photocured Film 1.

The ultraviolet-visible-near infrared absorption spectrum of the resulting film was measured, whereupon semiconductive S₁₁ band (1,300 to 850 nm) and S₂₂ band (850 to 600 nm) absorption and also metallic band (600 to 450 nm) absorption were clearly observed, confirming that the SWCNTs are individually dispersed (see FIG. 5).

The film was immersed for 5 minutes in CHN/water and then dried, after which the ultraviolet-visible-near infrared absorption spectrum was again measured, whereupon an absorption spectrum from the SWCNTs was observed, confirming that the film was cured (see FIG. 6).

### [Comparative Example 2] Photocured Film 2

Aside from using the 20E-35EVF1 varnish prepared in Comparative Example 1, Photocured Film 2 was obtained in the same way as in Example 2.

The ultraviolet-visible-near infrared absorption spectrum of the resulting film was measured, whereupon absorption in the above bands was not observed, thus confirming that the SWCNT dispersibility was low (see FIG. 7).

The film was immersed for 5 minutes in CHN/water and then dried, after which the ultraviolet-visible-near infrared absorption spectrum was again measured. However, absorption in the above bands was not similarly confirmed (see FIG. 8).

### [Production Example 6] Production of CB Dispersion 1

A black dispersion (referred to below as "CB Dispersion 1") was obtained by using a bead mill (RBM-08, from Aimex Corporation; capacity, 800 mL) packed with 1,160.0 g of zirconia (1.0 mm diameter YTZ balls, from Nikkato Corporation) to disperse 185.1 g of the HB-TmDA40V solution obtained in Production Example 1, 37.0 g of carbon black (Printex 95, from Orion Engineered Carbons; primary particle size, 15 nm; specific surface area (BET), 240 m²/g), 74.8 g of cyclohexanone and 3.1 g of deionized water under the following conditions: 5 minutes at 200 rpm and 3 hours at 1,500 rpm.

### [Production Example 7] Production of CB Dispersion 2

Aside from using 144.4 g of the HB-TmDA40V solution obtained in Production Example 1, 28.9 g of carbon black (Printex 95, from Orion Engineered Carbons; primary particle size, 15 nm; specific surface area (BET), 240 m²/g), 121.6 g of cyclohexanone and 5.1 g of deionized water, a dispersion (referred to below as "CB Dispersion 2") was obtained in the same way as in Production Example 6.

### [Production Example 8]

A 20 wt % solution ("HB-TmDA40V2") was prepared by dissolving 40.0 g of the HB-TmDA40 obtained in Synthesis Example 1 in 153.6 g of cyclopentanone and 6.4 g of deionized water.

### [Production Example 9] Production of CB Dispersion 3

Aside from using 150.0 g of the HB-TmDA40V2 solution obtained in Production Example 8, 30.0 g of carbon black (NIPex 90, from Orion Engineered Carbons; primary particle size, 14 nm; specific surface area (BET), 350 m²/g), 115.2 g of cyclohexanone and 4.8 g of deionized water, a dispersion (referred to below as "CB Dispersion 3") was obtained in the same way as in Production Example 6.

### [Production Example 10] Production of CB Dispersion 4

Aside from using 150.0 g of the HB-TmDA40V2 solution obtained in Production Example 8, 30.0 g of carbon black (NIPex 35, from Orion Engineered Carbons; primary particle size, 31 nm; specific surface area (BET), 60 m²/g), 115.2 g of cyclohexanone and 4.8 g of deionized water, a dispersion (referred to below as "CB Dispersion 4") was obtained in the same way as in Production Example 6.

### [Production Example 11] Production of CB Dispersion 5

Aside from using 187.5 g of the HB-TmDA40V2 solution obtained in Production Example 8, 37.5 g of carbon black (NIPex 35, from Orion Engineered Carbons; primary particle size, 31 nm; specific surface area (BET), 60 m²/g), 81.0 g of cyclohexanone and 3.4 g of deionized water, a dispersion (referred to below as "CB Dispersion 5") was obtained in the same way as in Production Example 6.

### [Production Example 12] Production of CB Dispersion 6

Aside from using 150.0 g of a 20 wt % ATM-35 CPN/water solution obtained by mixing together 40.0 g of ATM-35E instead of HB-TmDA40V2, 153.6 g of cyclopentanone (CPN) and 6.4 g of deionized water, a dispersion (referred to below as "CB Dispersion 6") was obtained in the same way as in Production Example 9.

The average particle sizes and viscosities of CB Dispersions 1 to 6 obtained in Production Examples 6, 7 and 9 to 12 were measured using, respectively, a particle size analyzer and a viscometer. The storage stabilities of the dispersions were visually checked for the presence of gelation, and were rated as "Good" when there was no gelation and "NG" when gelation had occurred. The results are shown in Table 1.

**[Table 1]**

| Carbon black dispersion | Carbon black primary particle size (nm) | Dispersant | Primary solvent | Average particle size of dispersion (D50) | Average particle size of dispersion (D90) | Viscosity (mP·s) | Storage stability |
|---|---|---|---|---|---|---|---|
| Production Example 6 | 15 | HB-TmDA | CHN | 0.20 | 0.50 | 70 (5.0 rpm) | Good |
| Production Example 7 | 15 | HB-TmDA | CHN | 0.38 | 0.79 | 29 (10 rpm) | Good |
| Production Example 9 | 14 | HB-TmDA | CPN | 0.32 | 0.45 | 55 (10 rpm) | Good |
| Production Example 10 | 31 | HB-TmDA | CPN | 0.26 | 0.48 | 51 (10 rpm) | Good |
| Production Example 11 | 31 | HB-TmDA | CPN | 0.58 | 1.16 | 22 (10 rpm) | Good |
| Production Example 12 | 14 | ATM-35E | CPN | 2.02 | 2.24 | 260 (1.0 rpm) | NG |

As shown in Table 1, when HB-TmDA was used as the dispersant, the carbon black was confirmed to be efficiently dispersed.

### [Production Example 13]

A cyclopentanone/deionized water mixed solvent (referred to below as "CPN/water") was prepared by mixing together 192.0 g of cyclopentanone and 8.0 g of deionized water.

### [Example 3] Preparation of Photocurable Composition 3

A composition having a total solids concentration of 25 wt % was prepared by adding together 1.2 g of a 1 wt % solution of the surfactant Megafac R-40 (DIC Corporation) in CHN/water, 4.0 g of a 60 wt % solution of A-GLY-20E in CHN/water, 1.2 g of a 60 wt % solution of ATM-35E in CHN/water, 195.5 g of the CB dispersion prepared in Production Example 6 and 18.0 g of a 20 wt % solution of the photoradical initiator Irgacure OXE-02 (BASF) in CHN/water, and the resulting dispersion was filtered with a syringe filter (Millex AP™; pore size, 2.0 µm, from MILLIPORE). This dispersion is referred to below as "Photocurable Composition 3."

### [Example 4] Preparation of Photocurable Composition 4

Aside from adding together 1.0 g of a 1 wt % solution of the surfactant Megafac R-40 (DIC Corporation) in CHN/water, 3.4 g of a 60 wt % solution of A-GLY-20E in CHN/water, 1.0 g of a 60 wt % solution of ATM-35E in CHN/water, 209.5 g of the CB dispersion prepared in Production Example 7 and 15.2 g of a 20 wt % solution of the photoradical initiator Irgacure OXE-02 (BASF) in CHN/water and setting the total solids concentration to 20 wt %, a dispersion was prepared in the same way as in Example 3 This dispersion is referred to below as "Photocurable Composition 4."

### [Example 5] Preparation of Photocurable Composition 5

Aside from adding together 1.1 g of a 1 wt % solution of the surfactant Megafac R-40 (DIC Corporation) in CPN/water, 14.0 g of a 60 wt % solution of ATM-35E in CPN/water, 114.5 g of the CPN/water solution prepared in Production Example 13, 210.0 g of the CB dispersion prepared in Production Example 9 and 10.5 g of a 20 wt % solution of the photoradical initiator Irgacure OXE-02 (BASF) in CPN/water and setting the total solids concentration to 15 wt %, a dispersion was prepared in the same way as in Example 3 This dispersion is referred to below as "Photocurable Composition 5."

### [Example 6] Preparation of Photocurable Composition 6

Aside from adding together 0.9 g of a 1 wt % solution of the surfactant Megafac R-40 (DIC Corporation) in CPN/water, 12.0 g of a 60 wt % solution of ATM-35E in CPN/water, 98.2 g of the CPN/water solution prepared in Production Example 13, 180.0 g of the CB dispersion prepared in Production Example 10 and 9.0 g of a 20 wt % solution of the photoradical initiator Irgacure OXE-02 (BASF) in CPN/water and setting the total solids concentration to 15 wt %, a dispersion was prepared in the same way as in Example 3 This dispersion is referred to below as "Photocurable Composition 6."

### [Example 7] Preparation of Photocurable Composition 7

Aside from adding together 1.0 g of a 1 wt % solution of the surfactant Megafac R-40 (DIC Corporation) in CPN/water, 13.4 g of a 60 wt % solution of ATM-35E in CPN/water, 15.7 g of the CPN/water solution prepared in Production Example 13, 160.0 g of the CB dispersion prepared in Production Example 11 and 10.1 g of a 20 wt % solution of the photoradical initiator Irgacure OXE-02 (BASF) in CPN/water and setting the total solids concentration to 25 wt %, a dispersion was prepared in the same way as in Example 3 This dispersion is referred to below as "Photocurable Composition 7."

### [Comparative Example 3] Preparation of Photocurable Composition 8

Aside from using CB Dispersion 6 prepared in Production Example 12, an attempt was made to prepare a dispersion having a total solids concentration of 20 wt % in the same way as in Example 5. However, the syringe filter (Millex AP™; pore size, 2.0 µm, from MILLIPORE) clogged, and so an unfiltered dispersion was used (this dispersion is referred to below as "Photocurable Composition 8").

### [Example 8] Preparation of Heat-Curable Composition 1

A dispersion having a total solids concentration of 15 wt % was prepared by adding together 0.6 g of a 1 wt % solution of the surfactant Megafac R-40 (DIC Corporation) in CPN/water, 1.32 g of a 50 wt % solution of Acrydic A-817 (DIC Corporation) in CPN/water, 39.0 g of the CPN/water solution prepared in Production Example 13, and 109.2 g of the CB dispersion prepared in Production Example 9, and filtering the resulting dispersion with a syringe filter (Millex AP™; pore size, 2.0 µm, from MILLIPORE). This dispersion is referred to below as "CB Dispersion 7."

Next, 22.5 g of Coronate 2770 (Nippon Polyurethane Industry Co., Ltd.) and 127.5 g of cyclopentanone were added together and, to 1.4 g of the solution obtained therefrom by filtration with a syringe filter (Millex AP™, pore size, 2.0 µm, from MILLIPORE), was added 7.0 g of the CB Dispersion 7 prepared above, thereby giving a heat-curable composition having a total solids concentration of 15 wt %. This dispersion is referred to below as "Heat-Curable Composition 1").

The viscosities of Photocurable Compositions 3 to 8 and Heat-Curable Composition 1 obtained in Examples 3 to 8 and Comparative Example 3 were measured with a viscometer. The results are shown in Table 2.

**[Table 2]**

| Composition | Carbon black dispersion | Crosslinking Agent 1 | Crosslinking Agent 2 | Solids (wt %) | Viscosity (mP·s) | Filterability |
|---|---|---|---|---|---|---|
| Example 3 | Production Example 6 | ATM-35E | A-GLY-20E | 25 | 38 (10 rpm) | Good |
| Example 4 | Production Example 7 | ATM-35E | A-GLY-20E | 20 | 20 (10 rpm) | Good |
| Example 5 | Production Example 9 | ATM-35E | - | 15 | 14 (20 rpm) | Good |
| Example 6 | Production Example 10 | ATM-35E | - | 15 | 5 (20 rpm) | Good |
| Example 7 | Production Example 11 | ATM-35E | - | 25 | 16 (10 rpm) | Good |
| Example 8 | Production Example 9 | Coronate 2770 | A-817 | 15 | 7 (10 rpm) | Good |
| Comparative Example 3 | Production Example 12 | ATM-35E | - | 20 | - | NG |

### [Example 9] Photocured Film 3

A Photocured Film 3 was produced by spin-coating Photocurable Composition 3 prepared in Example 3 onto an alkali-free glass substrate with a spin coater at 200 rpm for 5 seconds and at 700 rpm for 30 seconds, baking at 130°C for 3 minutes on a hot plate, then curing with a high-pressure mercury vapor lamp at a cumulative exposure dose of 400 mJ/cm².

### [Example 10] Photocured Film 4

Aside from using the Photocurable Composition 4 prepared in Example 4, a Photocured Film 4 was produced in the same way as in Example 9.

### [Example 11] Photocured Film 5

Aside from using the Photocurable Composition 5 prepared in Example 5, a Photocured Film 5 was produced in the same way as in Example 9.

### [Example 12] Photocured Film 6

Aside from using the Photocurable Composition 6 prepared in Example 6, a Photocured Film 6 was produced in the same way as in Example 9.

### [Example 13] Photocured Film 7

Aside from using the Photocurable Composition 7 prepared in Example 7, a Photocured Film 7 was produced in the same way as in Example 9.

### [Comparative Example 4] Photocured Film 9

Aside from using the Photocurable Composition 8 prepared in Comparative Example 3, a Photocured Film 9 was produced in the same way as in Example 9.

### [Example 14] Heat-Cured Film 1

Heat-Curable Composition 1 prepared in Example 8 was spin-coated at 200 rpm for 5 seconds and at 700 rpm for 30 seconds, and then baked at 120°C for 60 minutes on a hot plate, thereby producing Heat-Cured Film 1.

The total light transmittances of Photocured Films 3 to 9 and Photocured Film 1 obtained in Examples 9 to 14 and Comparative Example 4 were measured with a haze meter. In addition, the film thicknesses after film production and also after 3 minutes of immersion in CHN were measured with a film thickness gauge, and the residual film ratio was determined from the measured values following immersion in CHN. The results are shown in Table 3.

**[Table 3]**

| Cured film | Composition | Total light transmittance (%) | Film thickness after film production (µm) | Film thickness after CHN immersion (µm) | Residual film ratio (%) | Curability |
|---|---|---|---|---|---|---|
| Example 9 | Example 3 | 0.00 | 3.29 | 3.08 | 94 | Good |
| Example 10 | Example 4 | 0.00 | 1.76 | 1.7 | 97 | Good |
| Example 11 | Example 5 | 0.00 | 1.98 | 1.95 | 98 | Good |
| Example 12 | Example 6 | 0.12 | 1.14 | 1.13 | 100 | Good |
| Example 13 | Example 7 | 0.00 | 2.73 | 2.76 | 101 | Good |
| Example 14 | Example 8 | 0.09 | 1.23 | 1.22 | 99 | Good |
| Comparative Example 4 | Comparative Example 3 | - | - | - | - | NG |

The films obtained in Examples 9 to 14 had total light transmittances of 0.1% or less (0.00% is the detection limit), and so uniform thin-films having high light shielding properties were obtained. In addition, the residual film ratio following CHN immersion, relative to before CHN immersion, was 94% or more, thus confirming that the films had cured. By contrast, in Comparative Example 4, radial film irregularities arose, and the film had a tacky surface.

## Claims

1. A carbon material-dispersed film-forming composition which is **characterized by** comprising a triazine ring-containing polymer having a recurring unit structure of formula (1) below, a crosslinking agent and a carbon material 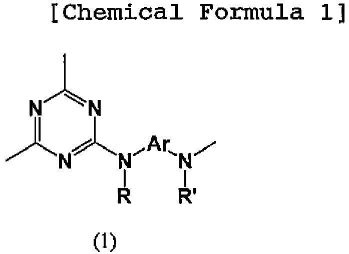 {wherein R and R' are each independently a hydrogen atom, an alkyl group, an alkoxy group, an aryl group or an aralkyl group; and Ar is at least one moiety selected from the group consisting of moieties of formulas (2) to (13) 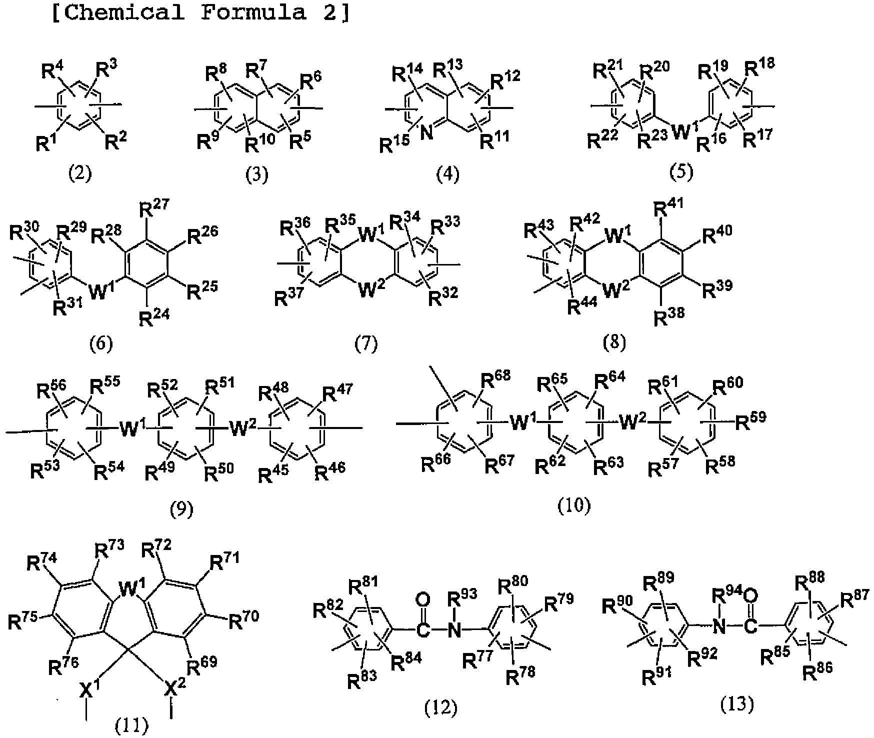 [wherein R¹ to R⁹² are each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; R⁹³ and R⁹⁴ are hydrogen atoms or alkyl groups of 1 to 10 carbon atoms which may have a branched structure; W¹ and W² are each independently a single bond, CR⁹⁵R⁹⁶ (R⁹⁵ and R⁹⁶ being each independently a hydrogen atom or an alkyl group of 1 to 10 carbon atoms which may have a branched structure (with the proviso that they may together form a ring)), C=O, O, S, SO, SO₂ or NR⁹⁷ (R⁹⁷ being a hydrogen atom or an alkyl group of 1 to 10 carbon atoms which may have a branched structure); and X¹ and X² are each independently a single bond, an alkylene group of 1 to 10 carbon atoms which may have a branched structure, or a group of formula (14) 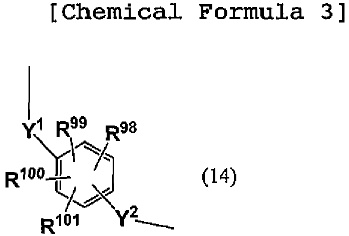 (R⁹⁸ to R¹⁰¹ being each independently a hydrogen atom, a halogen atom, a carboxyl group, a sulfo group, an alkyl group of 1 to 10 carbon atoms which may have a branched structure, or an alkoxy group of 1 to 10 carbon atoms which may have a branched structure; and Y¹ and Y² being each independently a single bond or an alkylene group of 1 to 10 carbon atoms which may have a branched structure)]}.

2. The carbon material-dispersed film-forming composition of claim 1, wherein the carbon material includes at least one selected from the group consisting of carbon nanotubes, carbon nanohorns, fullerene, graphene, carbon black, ketjen black, graphite and carbon fibers.

3. The carbon material-dispersed film-forming composition of claim 1, wherein the carbon material includes carbon nanotubes, which carbon nanotubes are individually dispersed down in size to individual nanotubes.

4. The carbon material-dispersed film-forming composition of claim 1, wherein the carbon material is carbon black.

5. The carbon material-dispersed film-forming composition of any one of claims 1 to 4, wherein the crosslinking agent is a compound that is light- and/or heat-curable.

6. The carbon material-dispersed film-forming composition of any one of claims 1 to 4, wherein the crosslinking agent is at least one selected from the group consisting of polyfunctional (meth)acrylic compounds, polyfunctional epoxy compounds and polyfunctional isocyanate compounds.

7. A cured film obtained by curing the carbon material-dispersed film-forming composition of any one of claims 1 to 6.

8. An electronic device comprising a substrate and the cured film of claim 7 formed on the substrate.

9. An optical material comprising a substrate and the cured film of claim 7 formed on the substrate.
